# EUROPÄISCHE PATENTSCHRIFT

(11) **EP 3 042 232 B1**
(45) Veröffentlichungstag und Bekanntmachung des Hinweises auf die Patenterteilung: **17.07.2019**
(21) Anmeldenummer: 14758921.2
(22) Anmeldetag: 03.09.2014
(51) Int. Cl.: G01J 3/12, G02B 27/28, G02B 21/00, G02F 1/11, G02F 1/33

(54) **SCANMIKROSKOP UND AKUSTOOPTISCHER HAUPTSTRAHLTEILER FÜR EIN SCANMIKROSKOP**
SCANNING MICROSCOPE AND MAIN BEAM SPLITTER FOR SCANNING MICROSCOPE
MICROSCOPE À BALAYAGE ET SÉPARATEUR DE FAISCEAUX PRINCIPAUX POUR MICROSCOPE À BALAYAGE

(30) Priorität: 03.09.2013 DE 102013217496; 23.12.2013 DE 102013227104
(43) Veröffentlichungstag der Anmeldung: 13.07.2016
(73) Patentinhaber: Leica Microsystems CMS GmbH, 35578 Wetzlar (DE)
(72) Erfinder: KRISHNAMACHARI, Vishnu Vardhan, 64342 Seeheim-Jugenheim (DE)
(74) Vertreter: Bradl, Joachim
(86) Internationale Anmeldenummer: PCT/EP2014/068749
(87) Internationale Veröffentlichungsnummer: WO 2015/032821

(56) Entgegenhaltungen:
- EP-A2- 1 085 362
- WO-A1-00/39545
- DE-A1- 19 906 757
- US-A1- 2003 107 732

## Beschreibung

Die Erfindung betrifft einen akustooptischen Hauptstrahlteiler für ein Scanmikroskop, der dazu ausgebildet und bestimmt ist, Beleuchtungslicht einer vorgewählten oder vorwählbaren Beleuchtungslichtwellenlänge auf einen Beleuchtungsstrahlengang zur Beleuchtung einer Probe zu lenken und von einer Probe kommendes Detektionslicht auf einen Detektionsstrahlengang zu lenken.

In der Scanmikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet. Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird beispielsweise über einen Strahlteiler eingekoppelt.

Das vom Objekt kommende Fluoreszenzlicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu ein dreidimensionales Bild ergibt.

In der Fluoreszenzmikroskopie müssen die Anteile von an der Probe reflektiertem und an der Probe gestreutem Beleuchtungslicht aus dem Detektionslicht entfernt werden, um ausschließlich das Fluoreszenzlicht detektieren zu können. Hierzu wird bei einem klassischen Mikroskop ein dichroitischer Filter, als sog. Hauptstrahlteiler verwendet.

Anstelle eines solchen Strahlteilers kann zum Einkoppeln des Anregungslichts mindestens einer Lichtquelle in das Mikroskop und zum Ausblenden des am Objekt gestreuten und reflektierten Anregungslichts bzw. der Anregungswellenlänge aus dem über den Detektionsstrahlengang vom Objekt kommenden Lichts auch eine als akustooptisches Bauteil ausgestaltete optische Anordnung vorgesehen sein, was beispielsweise aus der Deutschen Offenlegungsschrift DE 199 06 757 A1 bekannt ist. Die aus dieser Druckschrift bekannte optische Anordnung ist zur variablen Ausgestaltung bei einfachster Konstruktion dadurch gekennzeichnet, dass durch das spektral selektive Element Anregungslicht unterschiedlicher Wellenlänge ausblendbar ist. Alternativ ist eine solche optische Anordnung dadurch gekennzeichnet, dass das spektral selektive Element auf die auszublendende Anregungswellenlänge einstellbar ist.

Die Funktionsweise eines solchen akustooptischen Bauteils beruht im Wesentlichen auf der Wechselwirkung des Beleuchtungslichtes mit einer mechanischen Welle. Wobei bei einigen akustooptischen Bauteilen, beispielsweise bei einem AOTF, die mechanische Welle eine ganz bestimmte Frequenz aufweisen muss, damit genau für das Licht der gewünschten Beleuchtungslichtwellenlänge die Bragg-Bedingung erfüllt ist. Licht, für das die Bragg-Bedingung nicht erfüllt ist, wird bei diesen akustooptischen Bauteilen durch die mechanische Welle nicht abgelenkt. Soll Licht mehrerer Wellenlängen als Beleuchtungslicht zur Beleuchtung der Probe verwendet werden, so müssen auch mehrere mechanische Wellen mit unterschiedlicher Frequenz gleichzeitig erzeugt werden.

Akustooptische Bauteile bestehen in der Regel aus einem sogenannten akustooptischen Kristall, an dem ein elektrischer Wandler (in der Literatur oft als Transducer bezeichnet) angebracht ist. Üblicherweise umfasst der Wandler ein piezoelektrisches Material sowie eine darüber liegende und eine darunter liegende Elektrode. Durch elektrisches Beschalten der Elektroden mit Radiofrequenzen, die typischer Weise im Bereich zwischen 30 MHz und 800 MHz liegen, wird das piezoelektrische Material zum Schwingen gebracht, so dass eine akustische Welle, d.h. eine Schallwelle, entstehen kann, die nach ihrer Entstehung den Kristall durchläuft. Meist wird die akustische Welle nach dem Durchlaufen eines optischen Wechselwirkungsgebiets an der gegenüberliegenden Kristallseite absorbiert oder in eine von der Einfallssrichtung unterschiedliche Richtung reflektiert, so dass das Licht nicht mehr beeinflusst wird.

Akustooptische Kristalle zeichnen sich dadurch aus, dass die entstehende Schallwelle die optischen Eigenschaften des Kristalls verändert, wobei durch den Schall eine Art optisches Gitter oder eine vergleichbare optisch aktive Struktur, beispielsweise ein Hologramm, induziert wird. Durch den Kristall tretendes Licht erfährt an dem optischen Gitter eine Beugung.

Entsprechend wird das Licht in verschiedenen Beugungsordnungen in Beugungsrichtungen gelenkt. Es gibt akustooptische Bauteile, die das gesamte einfallende Licht mehr oder weniger unabhängig von der Wellenlänge beeinflussen. Dazu sei lediglich beispielhaft auf Bauteile, wie AOM (acouso optical modulator), AOD (acousto optical deflector) Frequenzschieber verwiesen.

Außerdem gibt es auch bereits Bauteile, die beispielsweise abhängig von den eingestrahlten Radiofrequenzen selektiv auf einzelne Wellenlängen wirken (AOTFs). Häufig bestehen die akustooptischen Elemente aus doppelbrechenden Kristallen, wie beispielsweise Tellurdioxid, wobei insbesondere die Lage der Kristallachse relativ zur Einfallsrichtung des Lichts und seiner Polarisation die optische Wirkung des jeweiligen Elements bestimmt. Diese Zusammenhänge sind beispielsweise aus DE 10 2006 053 187 A1 bekannt.

Die Arbeitsweise eines Scanmikroskops, das ein akustooptisches Bauteil als Hauptstrahlteiler aufweist, ist detailliert in DE 101 37 155 A1 beschrieben. Dort ist auch beschrieben, dass die das tangential polarisierte Beleuchtungslicht ablenkende mechanische Welle eines ersten AOTF ausschließlich die Anteile der Beleuchtungslichtwellenlänge mit tangentialer Linearpolarisationsrichtung aus dem Detektionslicht vollständig entfernen kann. Allerdings weist das Detektionslicht sowohl Anteile mit sagittaler, als auch mit tangentialer Polarisationsrichtung auf.

Aus diesem Grund ist dem akustooptischen Bauteil ein Kompensationselement nachgeschaltet, das als weiteres akustooptisches Bauteil ausgeführt ist. Das weitere akustooptische Bauteil ist ebenfalls als AOTF ausgeführt und wird von einer weiteren Hochfrequenzquelle mit einer weiteren elektromagnetischen Hochfrequenzwelle einer anderen Frequenz angesteuert. Die HF-Frequenz der weiteren elektromagnetischen Hochfrequenzwelle ist derart gewählt, dass die Anteile des Detektionslichts, die die Wellenlänge des Beleuchtungslichts und eine sagittale Polarisationsrichtung aufweisen, ausgeblendet werden. Diese Vorgehensweise ist nötig, weil für das aus dem Detektionslicht auszublendende Licht mit sagittaler Polarisationsrichtung die Bragg-Bedingung für die Beugung an einer mechanischen Welle nur erfüllt ist, wenn die mechanische Welle eine andere Frequenz als für das Licht mit tangentialer Polarisationsrichtung aufweist. Daher muss das Mikroskop für jede Beleuchtungslichtwellenlänge zwei unterschiedliche HF-Frequenzen zur gleichzeitigen Erzeugung von zwei mechanischen Wellen unterschiedlicher Frequenz bereitstellen. Darüber hinaus ist zwingend ein weiteres akustooptisches Bauteil mit einem weiteren Schallerzeuger notwendig. Soll beispielsweise eine Beleuchtung mit Beleuchtungslicht von vier Wellenlängen erfolgen, ist eine Fluoreszenzlichtdetektion nur möglich, wenn gleichzeitig acht elektromagnetische Hochfrequenzwellen bereitgestellt und daraus - verteilt auf zwei akustooptische Bauteile - acht mechanische Wellen unterschiedlicher Frequenzen erzeugt werden.

Aus der WO 00/39454 A1 ist eine Anordnung zur Messung von von einem Objekt ausgehendem Fluoreszenzlich bekannt, bei der das Detektionslicht durch einen AOTF in Anteile mit unterschiedlichen Polarisationsrichtungen aufgespalten ist. Weiterhin wird eine Strahlvereinigungseinheit beschrieben, mit der zwei Eingangslichtstrahlen unterschiedlicher Polarisation mit Hilfe eines AOTF kollinear vereinigt werden können.

In der US 2004/0174585 A1 wird eine Anordnung zum Trennen eines Beleuchtungslichtstrahls von einem Detektionslichtstrahl beschrieben, die ebenfalls ein akustooptisches Element umfasst. Die Anordnung weist ein Kompensationselement auf, das ein Aufspalten des Detektionslicht in dem Kristall des akustooptischen Elements kompensiert.

Die EP 1 085 362 A2 offenbart eine optische Anordnung im Strahlengang eines Laser-Scanning-Mikroskop mit einem spektral selektiven Element, welches Anregungslicht der Lichtquelle in das Mikroskop einkoppelt und dasan einem Objekt gestreute und reflektierte Anregungslicht aus dem Detektionsstrahlengang zumindest teilweise ausblendet. Dabei ist dem spektral selektiven Element ein weiteres optisches Bauteil nachgeordnet, nach dessen Durchlaufen die dispersiven und/oder doppelbrechenden Eigenschaften des Detektionslichts detektierbar sind.

Die DE 199 06 757 A1 beschreibt eine optische Anordnung im Strahlengang einer zur Fluoreszenzanregung geeigneten Lichtquelle mit einem spektral selektiven Element, das ein akustooptisches Bauteil sein kann, wobei durch das Element Anregungslicht unterschiedlicher Wellenlänge ausblendbar ist. Dazu kann das spektral selektive Element auf die auszublendende Anregungslichtwellenlänge einstellbar sein.

Sehr gravierend ist das Problem, dass oftmals störende Streifen unbekannter Ursache im Bild eines Scanmikroskops auftreten, die bei Verwendung von herkömmlichen, dichroitischen Hauptstrahlteilern nicht zu beobachten sind.

Es ist daher die Aufgabe der vorliegenden Erfindung einen akustooptischen Hauptstrahlteiler anzugeben, bei dessen Verwendung die störenden Streifen nicht auftreten.

Die Aufgabe wird durch einen akustooptischen Hauptstrahlteiler gelöst, in dem eine mechanische Welle einer der Beleuchtungslichtwellenlänge zugeordneten Schallfrequenz propagiert oder mehrere mechanische Wellen, die dieselbe, der Beleuchtungslichtwellenlänge zugeordnete Schallfrequenz aufweisen, propagieren, der dadurch gekennzeichnet ist, dass der akustooptische Hauptstrahlteiler wenigstens ein dispersives optisches Bauteil aufweist, das eine (wenigstens teilweise) von dem Kristall des akustooptischen Hauptstrahlteilers, durch den die mechanische Welle propagiert, hervorgerufene räumliche Farbaufspaltung eines Primärlichtes und/oder des Beleuchtungslichtes kompensiert und eine erste Eintrittsfläche für Licht mit einer ersten Linearpolarisationsrichtung und eine zweite Eintrittsfläche für Licht mit einer zweiten, zur ersten Linearpolarisationsrichtung senkrechten Linearpolarisationsrichtung aufweist, wobei
a. aus dem von einer Probe kommenden Detektionslichtbündel durch Wechselwirkung mit der einen mechanischen Welle oder durch Wechselwirkung mit den mechanischen Wellen sowohl ein die Beleuchtungslichtwellenlänge und eine erste Linearpolarisationsrichtung aufweisender Anteil des Detektionslichtbündes, als auch ein die Beleuchtungslichtwellenlänge und eine zweite, zur ersten Linearpolarisationsrichtung senkrechte Linearpolarisationsrichtung aufweisender Anteil des Detektionslichtes abgelenkt - und dadurch aus dem Detektionslichtbündel entfernt werden, und/oder wobei
b. der akustooptische Hauptstrahlteiler dazu ausgebildet ist, durch Wechselwirkung mit der einen mechanischen Welle oder durch Wechselwirkung mit den mechanischen Wellen sowohl den Anteil von Beleuchtungslicht, das die vorgewählte Beleuchtungslichtwellenlänge und eine erste Linearpolarisationsrichtung aufweist, als auch den Anteil von Beleuchtungslicht, das die vorgewählte Beleuchtungslichtwellenlänge und eine zweite, von der ersten Linearpolarisationsrichtung verschiedene, insbesondere senkrechte, Linearpolarisationsrichtung aufweist auf einen Beleuchtungsstrahlengang zur Beleuchtung einer Probe zu lenken.

In erfindungsgemäßer Weise wurde zunächst erkannt, dass die störenden Streifen im Bild auf eine Schwebung zurückzuführen ist, die auftritt, wenn die Frequenzbereiche der einzelnen mechanischen Wellen überlappen, was letztlich zu periodischen Schwankungen der Lichtleistung des an der Probe und/oder am Detektor ankommenden Lichtes führt. Dieses Problem basiert insbesondere auf der Tatsache, dass die mechanischen Wellen naturgemäß keine unendlich schmale, also singuläre, Schallfrequenz aufweisen können, sondern vielmehr immer ein Frequenzbereich um eine Mittenfrequenz vorhanden sein muss. Dennoch wird in dieser Anmeldung der besseren Lesbarkeit halber von Schallfrequenzen gesprochen, wobei damit jeweils die Mittenfrequenz gemeint ist.

In erfindungsgemäßer und vorteilhafter Weise ist die in den akustooptischen Hauptstrahlteiler durch Beaufschlagen mit elektromagnetischen HF-Wellen eingebrachte Wärmeleistung wesentlich geringer, als bei den aus dem Stand der Technik bekannten akustooptischen Hauptstrahlteilern. Bei diesen wird nämlich durch das Einkoppeln von je zwei mechanischen Wellen pro Beleuchtungslichtwellenlänge eine besonders große Wärmeleistung in den Kristall bzw. die Kristalle eingetragen, was letztlich die Beugungseffizienz reduziert und dazu führt, dass durch die unvermeidbaren Temperaturschwankungen auch die Ablenkungsrichtungen und damit die Lichtleistungen des an der Probe und am Detektor ankommenden Lichtes schwanken. All diese Nachteile sind bei dem erfindungsgemäßen akustooptischen Hauptstrahlteiler vermieden oder zumindest wesentlich reduziert.

Im Folgenden wird der besseren Übersichtlichkeit halber zunächst, insbesondere anhand von verschiedenen Ausführungsbeispielen und Vergleichsbeispielen, erläutert, wie der erfindungsgemäße akustooptische Hauptstrahlteiler funktioniert, wenn lediglich das Licht einer einzigen Bleuchtungslichtwellenlänge auf einen Beleuchtungsstrahlengang und/oder lediglich die Anteile aus dem von der Probe kommenden Detektionslicht, die die einzige Bleuchtungslichtwellenlänge aufweisen, entfernt werden sollen. Wie weiter unten noch ausführlich erläutert wird ist es jedoch auch möglich das der Erfindung zu Grunde liegende Prinzip in jeweils derselben Anordnung simultan mehrfach anzuwenden, wenn Beleuchtungslicht mehrerer Bleuchtungslichtwellenlängen gleichzeitig auf einen Beleuchtungsstrahlengang gelenkt werden soll und/oder wenn gleichzeitig die Anteile mehrerer Bleuchtungslichtwellenlängen aus dem von der Probe kommenden Detektionslicht entfernt werden sollen, wobei für jede der Bleuchtungslichtwellenlänge wenigstens eine eigene mechanische Welle jeweils einer für die Bleuchtungslichtwellenlänge spezifischen Schallfrequenz erforderlich ist.

Der erfindungsgemäße akustooptische Hauptstrahlteiler hat darüber hinaus den Vorteil, dass er durch einfaches Ändern der Schallfrequenz bzw. Schallfrequenzen Licht einer anderen Wellenlänge bzw. anderer Wellenlängen abgelenkt werden kann, so dass ein mit dem akustooptischen Hauptstrahlteiler ausgerüstetes Mikroskop sehr individuell einsetzbar ist.

Eine wesentliche, der Erfindung zu Grunde liegende Idee, nämlich die Idee Beleuchtungslicht und/oder Detektionslicht einer vorbestimmten oder vorbestimmbaren Wellenlänge unabhängig von dessen Polarisation unter Verwendung einer einzigen, der Wellenlänge zugeordneten Schallfrequenz auf einen Beleuchtungsstrahlengang oder einen Detektionsstrahlengang zu lenken, kann in unterschiedlicher Weise verwirklicht sein.

So ist es beispielsweise möglich, einen einzigen Kristall zu verwenden, in dem die mechanische Welle der zugeordneten Schallfrequenz propagiert und das Licht der vorbestimmten Wellenlänge unabhängig von dessen Polarisation ablenkt. Es ist jedoch auch möglich, in dem akustooptischen Hautstrahlteiler mehrere, insbesondere zwei, Kristalle zu verwenden. Exemplarisch sind nachfolgend einige der möglichen Ausgestaltungsvarianten erläutert.

In einer besonders einfach realisierbaren Ausführungsform sind zwei Kristalle vorhanden, in denen jeweils eine mechanische Welle propagiert, wobei die mechanischen Wellen dieselbe Schallfrequenz aufweisen, die Kristalle jedoch hinsichtlich anderer Parameter, wie beispielsweise Kristallschnitt und/oder Kristallausrichtung und/oder Ausbreitungsrichtungen der mechanischen Welle und des Lichtes, derart verschieden und aufeinander abgestimmt sind, dass in dem ersten der beiden Kristalle das Licht der vorbestimmten Wellenlänge mit einer ersten Linearpolarisationsrichtung abgelenkt wird, während in dem zweiten der beiden Kristalle das Licht der vorbestimmten Wellenlänge mit einer zweiten, insbesondere zur ersten Linearpolarisationsrichtung senkrechten, Linearpolarisationsrichtung abgelenkt wird.

In einem solchen akustooptischen Hauptstrahlteiler mit einer solchen Anordnung von Kristallen können vorteilhafter Weise mehrere Eingänge zum Einkoppeln von Beleuchtungslicht auf einen Beleuchtungslicht Strahlengang bereitgestellt sein. Insbesondere kann vorteilhafter Weise Beleuchtungslicht unterschiedlicher Linearpolarisationsrichtung eingekoppelt und auf einen Beleuchtungsstrahlengang gelenkt werden. Es ist jedoch auch möglich, dass der akustooptische Hauptstrahlteiler dazu ausgebildet ist, unpolarisiertes Primärlicht zu empfangen und wenigstens Anteile einer oder mehrerer bestimmter Wellenlängen, gegebenenfalls über unterschiedliche Eingänge eines Kristalls oder unterschiedliche Eingänge mehrerer Kristalle auf einen Beleuchtungsstrahlengang zur Beleuchtung einer Probe zu lenken. Ein solcher akustooptische Hauptstrahlteiler kann beispielsweise einen Polarisationsstrahlteiler aufweisen, der das unpolarisierte Primärlicht empfängt und räumlich, in Abhängigkeit von der Linearpolarisationsrichtung aufspaltet, so dass die entstehenden Beleuchtungslichtstrahlenbündel über unterschiedliche Eingänge eines Kristalls oder mehrerer Kristalle der Wirkung der mechanischen Welle bzw. der Wirkung der mechanischen Wellen ausgesetzt werden können.

Bei einer besonderen Ausführung weist der akustooptische Hauptstrahlteiler einen ersten und einen zweiten Kristall auf, die derart angeordnet sind, dass sie nacheinander von dem Detektionslichtbündel durchlaufen werden. Durch Wechselwirkung mit einer im ersten Kristall vorhandenen ersten mechanischen Welle, die die Schallfrequenz aufweist, wird der die Beleuchtungslichtwellenlänge und die erste Linearpolarisationsrichtung aufweisende Anteil abgelenkt - und dadurch aus dem Detektionslichtbündel entfernt. Durch Wechselwirkung mit einer im zweiten Kristall vorhandenen zweiten mechanischen Welle, die ebenfalls die Schallfrequenz aufweist, wird der die Beleuchtungslichtwellenlänge und die zweite Linearpolarisationsrichtung aufweisende Anteil abgelenkt - und dadurch aus dem Detektionslichtbündel entfernt.

Eine solche Ausführung hat den ganz besonderen Vorteil, dass zumindest einer der Kristalle ein handelsüblicher Kristall, wie sie beispielsweise für akustooptische, einstellbare Filter (acousto optical tunable filter: AOTF) verwendet werden, sein kann. Vorzugsweise ist der andere Kristall dann hinsichtlich anderer Parameter derart ausgebildet, dass seine mechanische Welle, die dieselbe Schallfrequenz aufweist, wie die des ersten Kristalls, auf das Licht der selben Wellenlänge, jedoch anderen Linearpolarisationsrichtung wirkt.

Unabhängig davon, ob der erste Kristall ein handelsüblicher Kristall oder ein speziell angefertigter Kristall ist, kann vorteilhaft insbesondere vorgesehen sein, dass sich der erste Kristall in Form und/oder Größe und/oder Kristallschnitt vom zweiten Kristall unterscheidet. Alternativ oder zusätzlich kann auch vorgesehen sein, dass die Ausrichtung die Ausbreitungsrichtung des Detektionslichtbündels relativ zur Gitterstruktur des ersten Kristalles von der Ausrichtung der Ausbreitungsrichtung des Detektionslichtbündels relativ zur Gitterstruktur des zweiten Kristalles verschieden ist und/oder dass die Ausrichtung die Ausbreitungsrichtung der ersten mechanischen Welle relativ zur Gitterstruktur des ersten Kristalles von der Ausrichtung der Ausbreitungsrichtung der zweiten mechanischen Welle relativ zur Gitterstruktur des zweiten Kristalles verschieden ist.

Bei einer besonderen Ausführung, bei der der akustooptische Hauptstrahlteiler zwei Kristalle aufweist, kann vorteilhaft vorgesehen sein, dass das Detektionslichtbündel zuerst den ersten und anschließend den zweiten Kristall durchläuft und dass durch Wechselwirkung mit der mechanischen Welle des ersten Kristalls Beleuchtungslicht der Beleuchtungslichtwellenlänge auf einen Beleuchtungsstrahlengang gelenkt wird. Alternativ oder zusätzlich kann auch vorgesehen sein, dass das Detektionslichtbündel zuerst den ersten und anschließend den zweiten Kristall durchläuft und dass durch Wechselwirkung mit der mechanischen Welle des zweiten Kristalls Beleuchtungslicht der Beleuchtungslichtwellenlänge auf einen Beleuchtungsstrahlengang gelenkt wird.

Auch in einem solchen akustooptischen Hauptstrahlteiler mit einer solchen Anordnung von Kristallen können vorteilhafter Weise mehrere Eingänge zum Einkoppeln von Beleuchtungslicht auf einen Beleuchtungsstrahlengang bereitgestellt sein. Insbesondere kann in vorteilhafter Weise Beleuchtungslicht unterschiedlicher Linearpolarisationsrichtung eingekoppelt und auf einen Beleuchtungsstrahlengang gelenkt werden. Auch bei einer solchen Ausführungsform kann der akustooptische Hauptstrahlteiler dazu ausgebildet sein, unpolarisiertes Primärlicht zu empfangen und wenigstens Anteile einer oder mehrerer bestimmter Wellenlängen, gegebenenfalls über unterschiedliche Eingänge eines Kristalls oder mehrerer Kristalle auf einen Beleuchtungsstrahlengang zur Beleuchtung einer Probe zu lenken. Insbesondere kann auch ein solcher akustooptische Hauptstrahlteiler beispielsweise einen Polarisationsstrahlteiler aufweisen, der das unpolarisierte Primärlicht empfängt und räumlich, in Abhängigkeit von der Linearpolarisationsrichtung aufspaltet, so dass die entstehenden Beleuchtungslichtstrahlenbündel über unterschiedliche Eingänge eines Kristalls oder mehrerer Kristalle der Wirkung der mechanischen Welle bzw. der Wirkung der mechanischen Wellen ausgesetzt werden können.

Alternativ zu den vorstehend beschriebenen Ausgestaltungsformen ist es auch möglich, dass der akustooptische Hauptstrahlteiler lediglich einen einzigen Kristall aufweist, in dem eine mechanische Welle propagiert, die eine der vorgewählten Wellenlänge des Lichtes zugeordnete Schallfrequenz aufweist.

Eine solche Ausführung ist vorzugsweise in der Weise ausgebildet, dass der Kristall und die Ausbreitungsrichtung der mechanischen Welle relativ zueinander und jeweils relativ zu dem in den Kristall einfallenden Detektionslichtbündel derart ausgerichtet sind, dass der akustooptische Hauptstrahlteiler mit der mechanischen Welle sowohl den die Beleuchtungswellenlänge und eine erste Linearpolarisationsrichtung aufweisenden Anteil des Detektionslichtbündels, als auch den die Beleuchtungswellenlänge und eine zweite, zur ersten Linearpolarisationsrichtung senkrechten Linearpolarisationsrichtung aufweisenden Anteil des Detektionslichtbündels ablenkt und dadurch aus dem Detektionslichtbündel entfernt.

Insbesondere kann vorgesehen sein, dass in dem Kristall Detektionslicht einer ersten Linearpolarisationsrichtung in eine erste ablenkt Richtung abgelenkt wird, während das Detektionslicht einer zweiten, insbesondere zur ersten Linearpolarisationsrichtung senkrechten, Linearpolarisationsrichtung in eine andere, zweite Richtung abgelenkt wird. Alternativ oder zusätzlich ist es auch möglich, dass Beleuchtungslicht einer ersten Linearpolarisationsrichtung in einen ersten Eingang des akustooptischen Hauptstrahlteilers eingekoppelt werden kann, während das Licht einer zweiten Linearpolarisationsrichtung in einen zweiten Eingang des akustooptischen Hauptstrahlteilers eingekoppelt werden kann.

Unabhängig von der speziellen Ausführung des akustooptischen Strahlteilers, jedoch insbesondere bei einem akustooptische Strahlteiler, bei dem eine mechanische Welle auf die Lichtanteile einer Bleuchtungslichtwellenlänge und beider Linearpolarisationsrichtungen wirkt, kann vorteilhaft vorgesehen sein, dass die strahlführenden Komponenten des Hauptstrahlteilers derart angeordnet und ausgebildet sind, dass der verbliebene Teil des Detektionslichtbündels den akustooptischen Hauptstrahlteiler kollinear verlässt und/oder dass sämtliche Beleuchtungslichtbündel der gewünschten Wellenlänge, unabhängig von ihrer Polarisationsrichtung, auf dem Beleuchtungslichtstrahlengang, auf den sie gelenkt wurden, kollinear vereinigt sind.

Die konkrete Ausgestaltung eines solchen akustooptischen Hauptstrahlteilers, insbesondere die Ausrichtung des Kristalls relativ zur Ausbreitungsrichtung der mechanischen Welle(n) und der Ausbreitungsrichtung des Detektionslichtbündels, sowie die Ausrichtung der mechanischen Welle(n) und des Detektionslichtbündels relativ zueinander, und auch die Ausrichtung der Ein- und Austrittsflächen zueinander und zur optischen Achse des Kristalls kann - insbesondere für eine Ausführung, bei der das abgespaltene Beleuchtungslicht den akustooptische Hauptstrahlteiler und/oder den Kristall als kollineares Beleuchtungslichtbündel verlässt - beispielsweise nach dem nachfolgend geschilderten, iterativen Verfahren entwickelt werden, wobei das Verfahren vorzugsweise nicht an Hand von realen Bauteilen, was allerdings auch möglich wäre, sondern in einer Computersimulation nachvollzogen wird, bis die einzelnen Parameter der Kristallform, der Ausrichtung der Flächen und des Kristallgitters, die Ausrichtung der Ausbreitungsrichtung der mechanischen Welle(n) und die Ausbreitungsrichtungen des Detektionslichtes und/oder des Beleuchtungslichtes den gewünschten Anforderungen entsprechen. Wenn in einer Computersimulation sämtliche relevante Parameter auf diese Weise ermittelt wurden, kann der Kristall anschließend in einem weiteren Schritt hergestellt werden.

Zunächst wird ein akustooptisches Bauteil, wie beispielsweise ein handelsüblicher AOTF, mit einem bekannten, üblichen Kristallschnitt und mit einer bekannten Ausrichtung so in den Strahlengang eines Mikroskops eingefügt, dass das Detektionslichtbündel unter einem Einfallswinkel von 90 Grad auf die Eintrittsfläche des Kristalls trifft. Anschließend wird der Kristall vorzugsweise in der Ebene, die durch das einfallende Detektionslichtbündel und die Ausbreitungsrichtung der mechanischen Welle aufgespannt ist, so weit gedreht und damit auch die Winkel zwischen der Ausbreitungsrichtung der mechanischen Welle und den Kristallachsen verändert, bis aus dem Detektionslichtbündel mit der/n mechanischen Welle(n) beide Linearpolarisationsanteile der Beleuchtungslichtwellenlänge(n) abgelenkt und dadurch aus dem Detektionslichtbündel entfernt werden.

Allerdings hat die Drehung in der Regel zur Folge, dass die Kollinearität des austretenden Detektionslichts verloren geht. Aus diesem Grund wird nun in einem nächsten Iterationsschritt - ohne den Kristall zu drehen - die Form des Kristalls derart geändert, dass die Eintrittsfläche wieder senkrecht zum auftreffenden Detektionslichtbündel steht. In einem weiteren Schritt wird die Austrittsfläche für das Detektionslicht - ohne Drehung des Kristalls, sondern durch Ändern der Kristallform - so ausgerichtet, dass das Detektionslicht den Kristall als kollineares Detektionslichtbündel verlässt.

Allerdings haben die Änderungen an der Kristallform in der Regel zur Folge, dass mit der mechanischen Welle nicht mehr jeweils beide Linearpolarisationsanteile der Beleuchtungslichtwellenlänge(n) abgelenkt und dadurch aus dem Detektionslichtbündel entfernt werden. Aus diesem Grund wird der Kristall nun wieder gedreht, bis diese Bedingung wieder erfüllt ist. Dann werden die bereits beschriebenen, weiteren Iterationsschritte wiederholt.

Es werden so viele Iterationszyklen durchgeführt, bis die Bedingung einer gleichzeitigen Ablenkung beider Linearpolarisationsanteile und die Bedingung eines kollinearen Lichtaustritts erfüllt sind. In der Regel konvergiert das Verfahren sehr schnell, so dass nach wenigen Iterationszyklen das Ziel erreicht ist.

Bei einer besonderen Ausführung wird beim Drehen des Kristalls jeweils darauf geachtet, dass in Bezug auf eine der Linearpolarisationsrichtungen des Detektionslichts das gesamte, in die erste Ordnung gebeugte Licht, das die Beleuchtungslichtwellenlängen aufweist, kollinear aus dem Kristall austritt. Eine solche Ausführung hat nicht nur den Vorteil, dass jeweils mit einer einzigen mechanischen Welle jeweils beide Anteile unterschiedlicher Linearpolarisation aus dem Detektionslichtbündel entfernt werden können, sondern dass zusätzlich auch über den Lichtweg der ersten Beugungsordnung, bei der die oben beschriebene Kollinearität besteht, mehrfarbiges Beleuchtungslicht kollinear auf den Beleuchtungslichtstrahlengang gebeugt werden kann.

Wie weiter oben bereits erläutert wurde, ist es möglich, dass der akustooptische Hauptstrahlteiler lediglich einen einzigen Kristall aufweist, in dem eine mechanische Welle propagiert, die eine der vorgewählten Wellenlänge des Lichtes zugeordnete Schallfrequenz aufweist und die auf Licht der vorgewählten Wellenlänge unabhängig von dessen Polarisation wirkt.

Bei einer besonderen Ausführung eines erfindungsgemäßen akustooptischen Hauptstrahlteilers sind zwei solcher Kristalle hintereinander geschaltet, so dass sie von dem zu detektierendem Detektionslicht nacheinander durchlaufen werden. Eine solche Ausführung bietet eine sehr gute Effizienz hinsichtlich des Entfernens der Lichtanteile aus dem von der Probe kommenden Detektionslicht, die die Bleuchtungslichtwellenlänge bzw. die Bleuchtungslichtwellenlängen aufweisen. Darüber hinaus bietet eine solche Ausführung in vorteilhafter Weise zusätzliche Einkopplungsmöglichkeiten zum Einkoppeln von weiteren Beleuchtungslichtbündeln auf einen Beleuchtungsstrahlengang eines Mikroskops. Insbesondere ermöglicht eine solche Anordnung mit mehreren Kristallen das simultane Einkoppeln mehrerer Beleuchtungslichtbündel auf einen Beleuchtungslichtstrahlengang eines Mikroskops.

Hierbei ist es insbesondere auch möglich, dass sowohl in dem ersten Kristall, als auch in dem zweiten Kristall einer solchen Anordnung jeweils eine mechanische Welle propagiert, die Licht der vorbestimmten Wellenlänge unabhängig von dessen Polarisation ablenkt, wobei die Schallfrequenzen der in den Kristallen propagierenden mechanischen Wellen auch unterschiedlich sein können. Vielmehr ist es auch möglich, dass sich der Aufbau der hintereinander geschalteten akustooptischen Bauteile, insbesondere der Aufbau und die Ausrichtung der Kristalle, so unterscheidet, dass sowohl die in dem ersten Kristall propagierende mechanische Welle mit ihrer Schallfrequenz, als auch die in dem zweiten Kristall propagierende mechanische Welle mit ihrer verschiedenen Schallfrequenz - jeweils unabhängig von der Polarisation - auf das Licht der Bleuchtungslichtwellenlänge wirkt.

Wie bereits erwähnt kann in vorteilhafter Weise vorgesehen sein, dass die strahlführenden Komponenten des Hauptstrahlteilers derart angeordnet und ausgebildet sind, dass der verbliebene Teil des Detektionslichtbündels den akustooptischen Hauptstrahlteiler kollinear verlässt.

Der akustooptische Hauptstrahlteiler kann in vorteilhafter Weise derart ausgebildet sein, dass die erste Linearpolarisationsrichtung die Linearpolarisationsrichtung des ordentlichen Lichtes bezogen auf eine Doppelbrechungseigenschaft des Kristalles ist. Alternativ oder zusätzlich kann vorgesehen sein, dass die zweite Linearpolarisationsrichtung die Linearpolarisationsrichtung des außerordentlichen Lichtes bezogen auf eine Doppelbrechungseigenschaft des Kristalles ist und/oder dass die erste oder die zweite Linearpolarisationsrichtung in der Ebene angeordnet ist, die von der Ausbreitungsrichtung der mechanischen Welle und der Ausbreitungsrichtung des Detektionslichtbündels aufgespannt ist.

In erfindungsgemäß vorteilhafter Weise kann der akustooptische Hauptstrahlteiler derart ausgebildet sein, dass er eine Vielzahl von Möglichkeiten zum beleuchten einer Probe, insbesondere zum lenken mehrerer, unterschiedlicher Beleuchtungslichtbündel auf einen Beleuchtungsstrahlengang eines Mikroskops bietet. Insbesondere kann vorteilhaft vorgesehen sein, dass der akustooptische Hauptstrahlteiler mehrere Eingänge zum Einkoppeln mehrerer Primärlichtbündel, aus denen jeweils Beleuchtungslicht einer vorgegebenen oder vorgebbaren Wellenlänge oder Beleuchtungslicht mehrerer vorgegebenen oder vorgebbaren Wellenlängen abgespalten und auf einen Beleuchtungsstrahlengang gelenkt werden kann.

Beispielsweise ist bei einer besonderen Ausführung vorgesehen, dass der akustooptische Hauptstrahlteiler einen ersten und einen zweiten Kristall aufweist, die insbesondere derart angeordnet sind, dass sie nacheinander von dem Detektionslichtbündel durchlaufen werden, wobei durch Wechselwirkung mit einer im ersten Kristall vorhandenen ersten mechanischen Welle, die die Schallfrequenz aufweist, Beleuchtungslicht, das die Beleuchtungslichtwellenlänge und eine erste Linearpolarisationsrichtung, auf den Beleuchtungsstrahlengang zur Beleuchtung einer Probe gelenkt wird, und wobei durch Wechselwirkung mit einer im zweiten Kristall vorhandenen zweiten mechanischen Welle, die die Schallfrequenz aufweist, Beleuchtungslicht, das die Beleuchtungslichtwellenlänge und eine zweite, von der ersten Linearpolarisationsrichtung verschiedene Linearpolarisationsrichtung aufweist, auf den Beleuchtungsstrahlengang zur Beleuchtung einer Probe gelenkt wird.

Alternativ kann auch vorgesehen sein, dass der akustooptische Hauptstrahlteiler dazu ausgebildet ist, durch Wechselwirkung mit der in einem Kristall propagierenden mechanischen Welle sowohl aus einem ersten polychromatischen und vorzugsweise kollinearen Primärlichtbündel mit einer ersten Linearpolarisationsrichtung, als auch aus einem zweiten polychromatischen und vorzugsweise kollinearen Primärlichtbündel mit einer zweiten, von der ersten Linearpolarisationsrichtung verschiedenen, insbesondere dazu senkrechten, Linearpolarisationsrichtung jeweils Beleuchtungslicht der der Frequenz der mechanischen Welle zugeordneten Beleuchtungslichtwellenlänge abzuspalten und zur Beleuchtung einer Probe auf einen Beleuchtungsstrahlengang zu lenken, oder dass der akustooptische Hauptstrahlteiler dazu ausgebildet ist, durch Wechselwirkung mit der in einem Kristall propagierenden mechanischen Welle sowohl Beleuchtungslicht, das die Beleuchtungslichtwellenlänge und eine erste Linearpolarisationsrichtung aufweist, als auch Beleuchtungslicht, das die Beleuchtungslichtwellenlänge und eine zweite, andere, insbesondere senkrechte, Linearpolarisationsrichtung aufweist, auf den Beleuchtungsstrahlengang zur Beleuchtung einer Probe zu lenken.

Mit Hilfe des erfindungsgemäßen Hauptstrahlteilers können unterschiedliche Beleuchtungslichtkomponenten, die sich hinsichtlich Wellenlänge und/oder Polarisation unterscheiden können, auf den Beleuchtungsstrahlenhgang zur Beleuchtung einer Probe gelenkt werden, um besondere, beispielsweise auflösungssteigernde, Effekte hervorzurufen. Insbesondere kann der erfindungsgemäße Hauptstrahlteiler im Bereich der STED-Mikroskopie (Stimulated Emission Depletion) oder im Bereich der CARS-Mikroskopie (Coherent Anti Stokes Raman Spectroscopy) oder im Bereich der SRS-Mikroskopie (Stimulated Raman Scattering) oder im Bereich der CSRS-Mikroskopie (Coherent Stokes Raman Scattering) oder im Bereich der Rikes-Mikroskopie (Raman induced Kerr-Effect Scattering) vorteilhaft verwendet werden.

Wie bereits erwähnt ist der akustooptische Hauptstrahlteiler nicht darauf beschränkt, lediglich Licht einer einzigen Wellenlänge abzulenken. Vielmehr kann vorgesehen sein, dass der akustooptische Hauptstrahlteiler mit mehreren mechanischen Wellen, die jeweils durch unterschiedliche Schallfrequenzen charakterisiert sind, aus dem Detektionslichtbündel Anteile von an einer Probe gestreutem und/oder reflektiertem Beleuchtungslicht mehrerer, den Schallfrequenzen zugeordneter Beleuchtungslichtwellenlängen entfernt.

Bei einer besonderen Ausführung ist vorgesehen, dass der akustooptische Hauptstrahlteiler einen ersten und einen zweiten Kristall aufweist, wobei in dem ersten Kristall simultan mit mehreren mechanischen Wellen, die jeweils durch unterschiedliche, unterschiedlichen Beleuchtungslichtwellenlängen zugeordneten Schallfrequenzen charakterisiert sind, aus dem Detektionslichtbündel Anteile von an einer Probe gestreutem und/oder reflektiertem Beleuchtungslicht, das eine erste Linearpolarisationsrichtung und die mehreren, den Schallfrequenzen zugeordnete Beleuchtungslichtwellenlängen aufweist, aus dem Detektionslichtbündel heraus gelenkt werden und wobei in dem zweiten Kristall simultan mit mehreren mechanischen Wellen, die dieselben Schallfrequenzen aufweisen, wie die mechanischen Wellen des ersten Kristalls, aus dem Detektionslichtbündel Anteile von an einer Probe gestreutem und/oder reflektiertem Beleuchtungslicht der mehreren, den Schallfrequenzen zugeordneten Beleuchtungslichtwellenlängen und einer zweiten, von der ersten Linearpolarisationsrichtung verschiedenen Linearpolarisationsrichtung aus dem Detektionslichtbündel heraus gelenkt werden.

Im Hinblick auf mehr Farbanwendungen kann, wie bereits erwähnt, vorteilhaft vorgesehen sein, dass in dem Hauptstrahlteiler, insbesondere in einem Kristall des Hauptstrahlteilers, simultan mehrere mechanischen Wellen propagieren, die jeweils durch unterschiedliche, unterschiedlichen Beleuchtungslichtwellenlängen zugeordnete Schallfrequenzen charakterisiert sind, wobei jede der mechanischen Wellen jeweils sowohl den die ihrer Frequenz zugeordnete Beleuchtungswellenlänge aufweisenden Anteil mit einer ersten Linearpolarisationsrichtung, also auch den Anteil mit einer zweiten, zur ersten Linearpolarisationsrichtung senkrechten Linearpolarisationsrichtung ablenkt und dadurch aus dem Detektionslichtbündel entfernt.

Hierbei kann insbesondere vorgesehen sein, dass die mechanischen Wellen dieselbe Ausbreitungsrichtung aufweisen und/oder von demselben Schallerzeuger erzeugt sind. Der Schallerzeuger ist vorzugsweise an einer Außenfläche des Kristalls befestigt, wobei die Ausbreitungsrichtung der mechanischen Welle relativ zu dem Kristall und seiner Gitterstruktur durch die Ausrichtung dieser Außenfläche relativ zum Kristallkörper bestimmt ist, die durch den Kristallschliff festlegbar ist.

Es kann vorteilhaft auch vorgesehen sein, dass der akustooptische Hauptstrahlteiler mit den mehreren mechanischen Wellen aus polychromatischem Primärlicht wenigstens einer Lichtquelle Beleuchtungslicht mehrerer Beleuchtungslichtwellenlängen abspaltet und zur Beleuchtung einer Probe auf einen Beleuchtungsstrahlengang lenkt. Insbesondere kann vorgesehen sein, dass der akustooptische Hauptstrahlteiler mit den mehreren mechanischen Wellen, aus einem polychromatischen und vorzugsweise kollinearen Primärlichtbündel Beleuchtungslicht mehrerer Beleuchtungslichtwellenlängen zur Beleuchtung der Probe abspaltet und zur Beleuchtung einer Probe auf einen Beleuchtungsstrahlengang lenkt.

Wie bereits weiter oben in Bezug auf eine mechanische Welle beschrieben kann vorteilhaft vorgesehen sein, dass der akustooptische Hauptstrahlteiler mit mehreren mechanischen Wellen, die unterschiedliche Schallfrequenzen aufweisen, jeweils sowohl aus einem ersten polychromatischen und vorzugsweise kollinearen Primärlichtbündel wenigstens einer Lichtquelle mit einer ersten Linearpolarisationsrichtung, als auch aus einem zweiten polychromatischen und vorzugsweise kollinearen Primärlichtbündel wenigstens einer Lichtquelle mit einer zweiten, zur ersten Linearpolarisationsrichtung senkrechten Linearpolarisationsrichtung jeweils Beleuchtungslicht mehrerer Wellenlängen abspaltet und zur Beleuchtung einer Probe auf einen Beleuchtungsstrahlengang lenkt, wobei jeweils der Frequenz der jeweiligen mechanischen Welle einer der Beleuchtungslichtwellenlängen zugeordnet ist.

Bei einer ganz besonders vielseitig einsetzbaren Ausführungsform ist vorgesehen, dass der akustooptische Hauptstrahlteiler und/oder ein Kristall des Hauptstrahlteilers einen ersten Eingang für ein erstes Primärlichtbündel einer ersten Linearpolarisationsrichtung, aus dem Beleuchtungslicht der vorgewählten oder vorwählbaren Wellenlänge zur Beleuchtung einer Probe abspaltbar ist, und einen zweiten Eingang für ein zweites Primärlichtbündel einer zweiten, anderen, insbesondere senkrechten, Linearpolarisationsrichtung, aus dem Beleuchtungslicht der vorgewählten oder vorwählbaren Wellenlänge zur Beleuchtung einer Probe abspaltbar ist, aufweist. Insbesondere kann vorteilhaft vorgesehen sein, dass das erste Primärlichtbündel und das zweite Primärlichtbündel durch räumliche Aufspaltung eines unpolarisierten Primärlichtbündels, beispielsweise einer Weißlichtquelle, mit einem Polarisationsstrahlteiler, entstanden sind.

Es kann auch vorgesehen sein, dass der akustooptische Hauptstrahlteiler einen Polarisationsstrahlteiler zum räumlichen Aufspalten eines Primärlichtbündels, beispielsweise einer Weißlichtquelle, die eine photonische Lichtleitfaser beinhaltet, in einen ersten Anteil mit einer ersten Linearpolarisationsrichtung und in einen Anteil einer zweiten, anderen, insbesondere senkrechten, Linearpolarisationsrichtung aufweist.

Wie ebenfalls bereits erwähnt kann vorteilhaft vorgesehen sein, dass das auf den Beleuchtungsstrahlengang gelenkte Beleuchtungslicht den akustooptischen Hauptstrahlteiler und/oder einen Kristall des akustooptischen Hauptstrahlteilers als kollineares Beleuchtungslichtbündel verlässt. Insoweit kann der akustooptische Hauptstrahlteiler als Strahlvereiniger für Beleuchtungslicht gleicher Wellenlänge, jedoch unterschiedlicher Linearpolarisation fungieren. Diese Ausführung hat den Vorteil, dass das Beleuchtungslicht mit einem einzigen Objektiv und vorzugsweise unter Ausleuchtung der gesamten Objektivpupille auf bzw. in die Probe fokussiert werden kann.

Bei einer besonderen Ausführung weist ein Kristall des akustooptischen Hauptstrahlteilers, durch den die mechanische Welle propagiert, eine Eintrittsfläche für das Detektionslicht aufweist, wobei insbesondere vorgesehen sein kann, dass das Detektionslicht mit einem Einfallswinkel von Null Grad einfällt.

Insbesondere kann alternativ oder zusätzlich auch vorgesehen sein, dass ein Kristall des akustooptischen Hauptstrahlteilers, durch den die mechanische Welle propagiert, eine Austrittsfläche für das Detektionslicht aufweist und/oder dass ein Kristall des akustooptischen Hauptstrahlteilers, durch den die mechanische Welle propagiert, eine Austrittsfläche für das Detektionslicht aufweist, durch die das Detektionslicht den Kristall mit einem Ausfallswinkel von Null Grad verlässt.

Bei einer besonderen Ausführung weist ein Kristall des akustooptischen Hauptstrahlteilers, durch den die mechanische Welle propagiert, eine Eintrittsfläche und eine hierzu parallel ausgerichtete Austrittsfläche für das Detektionslicht auf.

Bei einer ganz besonders vorteilhaften Ausführung weist ein Kristall des akustooptischen Hauptstrahlteilers wenigstens eine Eintrittsfläche für das Primärlicht wenigstens einer Lichtquelle auf. Wie bereits erläutert kann es sich bei der Lichtquelle vorteilhafter Weise um eine Lichtquelle handeln, die, beispielsweise mit Hilfe einer mikrostrukturierten Faser und/oder einer PBG-Faser, Primärlicht mit einem breiten Spektrum emittiert, so dass mit Hilfe des akustooptischen Hauptstrahlteilers jeweils die Lichtanteile der gewünschten Wellenlängen auf den Beleuchtungsstrahlengang des Mikroskops gelenkt werden können. Vorzugsweise erfolgt die Ablenkung des gewünschten Beleuchtungslichts durch Beugung an der mechanischen Welle (bzw. den mechanischen Wellen, wenn Licht mehrerer Wellenlängen als Beleuchtungslicht gewünscht ist) in die erste Beugungsordnung, während das verbleibende Licht ohne Wechselwirkung mit der mechanischen Welle (bzw. den Wellen) zu einer Strahlfalle gelangt.

Bei einer besonderen Ausführung ist vorgesehen, dass ein Kristall des akustooptischen Hauptstrahlteilers wenigstens eine Eintrittsfläche für das Primärlicht wenigstens einer Lichtquelle aufweist, das gleichzeitig die Austrittsfläche für das Detektionslicht ist.

Insbesondere kann auch vorgesehen sein, dass ein Kristall des akustooptischen Hauptstrahlteilers eine Austrittsfläche für das Beleuchtungslicht aufweist, die gleichzeitig die Eintrittsfläche für das Detektionslicht ist und/oder dass ein Kristall des akustooptischen Hauptstrahlteilers eine Eintrittsfläche für Primärlicht wenigstens einer Lichtquelle und eine Austrittsfläche für das abgespaltene Beleuchtungslicht aufweist, die derart zueinander ausgerichtet sind, dass das mit der mechanischen Welle abgelenkte Beleuchtungslicht mit einem Einfallswinkel von Null Grad auf die Austrittsfläche trifft.

Besonders vorteilhaft ist eine Ausführungsform, bei der ein Kristall des akustooptischen Hauptstrahlteilers eine Eintrittsfläche für Primärlicht wenigstens einer Lichtquelle und eine Austrittsfläche für das abgespaltene Beleuchtungslicht aufweist, die derart zueinander ausgerichtet sind, dass das Primärlicht als kollineares Primärlichtbündel in den Kristall einkoppelbar ist und das mit der mechanischen Welle abgelenkte Beleuchtungslicht den Kristall als kollineares Beleuchtungslichtbündel verlässt.

Um eine Kollinearität der relevanten Lichtbündel zu erreichen ist bei einer vorteilhaften Ausführungsform vorgesehen, dass der akustooptische Hauptstrahlteiler wenigstens ein dispersives optisches Bauteil aufweist, das eine (wenigstens teilweise) von dem Kristall hervorgerufene räumliche Farbaufspaltung des Primärlichtes und/oder des Beleuchtungslichtes und/oder des Detektionslichtes kompensiert.

Alternativ oder zusätzlich kann auch vorgesehen sein, dass der akustooptische Hauptstrahlteiler wenigstens ein dispersives optisches Bauteil aufweist, das eine (wenigstens teilweise) von dem Kristall hervorgerufene räumliche Farbaufspaltung des Primärlichtes und/oder des Beleuchtungslichtes und/oder des Detektionslichtes kompensiert und das mehrere Eintrittsflächen aufweist; insbesondere eine erste Eintrittsfläche für Licht mit einer ersten Linearpolarisationsrichtung und eine zweite Eintrittsfläche für Licht mit einer zweiten, zur ersten Linearpolarisationsrichtung senkrechten Linearpolarisationsrichtung.

Diese Ausführungsformen haben den besonderen Vorteil, dass der akustooptische Hauptstrahlteiler mit einem Kristall ausgestattet sein kann, der eine verhältnismäßig einfache Grundform aufweisen kann. Beispielsweise kann vorgesehen sein, dass die Eintrittsfläche für das Detektionslicht parallel zur Austrittsfläche für das Detektionslicht ausgebildet ist. Eine räumliche Farbaufspaltung des beispielsweise durch die Austrittsfläche für das Detektionslicht eingekoppelten Primärlichts einer Lichtquelle durch den Kristall kann in erfindungsgemäßer Weise beispielsweise dadurch kompensiert werden, dass das Primärlicht, bevor es auf den Kristall trifft, zunächst in entgegengesetzter Richtung räumlich aufgespalten wird und diese räumliche Aufspaltung durch den Kristall wieder rückgängig gemacht wird.

Insbesondere bei einer Ausführung des akustooptischen Hauptstrahlteilers, bei dem zwei Kristalle in Reihe geschaltet sind der Art, dass sie nacheinander von dem von der Probe ausgehenden Detektionslicht durchlaufen werden, kann, um eine Kollinearität des den akustooptischen Hauptstrahlteiler verlassenden Detektionslichts zu erreichen, vorteilhaft vorgesehen sein, dass das Eintrittsfenster des ersten Kristalls parallel zum Austrittsfenster des zweiten Kristalls angeordnet ist und dass zusätzlich das Austrittsfenster des ersten Kristalls parallel zum Eintrittsfenster des zweiten Kristalls angeordnet ist.

Um eine Kollinearität zu erreichen kann alternativ oder zusätzlich auch vorgesehen sein, dass der akustooptische Hauptstrahlteiler wenigstens ein dispersives optisches Bauteil aufweist, das eine (wenigstens teilweise) von einem Kristall des akustooptischen Hauptstrahlteilers, durch den die mechanische Welle propagiert, hervorgerufene räumliche Farbaufspaltung des Primärlichtes und/oder des Beleuchtungslichtes und/oder des Detektionslichtes kompensiert. Es ist alternativ oder zusätzlich auch möglich, dass der akustooptische Hauptstrahlteiler wenigstens ein dispersives optisches Bauteil aufweist, das eine (wenigstens teilweise) von einem Kristall des akustooptischen Hauptstrahlteilers, durch den die mechanische Welle propagiert, hervorgerufene räumliche Farbaufspaltung des Primärlichtes und/oder des Beleuchtungslichtes und/oder des Detektionslichtes kompensiert und das mehrere Eintrittsflächen aufweist und/oder dass der akustooptische Hauptstrahlteiler wenigstens ein dispersives optisches Bauteil aufweist, das eine (wenigstens teilweise) von einem Kristall des akustooptischen Hauptstrahlteilers, durch den die mechanische Welle propagiert, hervorgerufene räumliche Farbaufspaltung des Primärlichtes und/oder des Beleuchtungslichtes und/oder des Detektionslichtes kompensiert und eine erste Eintrittsfläche für Licht mit einer ersten Linearpolarisationsrichtung und eine zweite Eintrittsfläche für Licht mit einer zweiten, zur ersten Linearpolarisationsrichtung senkrechten Linearpolarisationsrichtung aufweist.

Besonders vielseitig einsetzbar ist ein Scanmikroskop, insbesondere ein konfokales Scanmikroskop, das mit einem erfindungsgemäßen akustooptische nach Hauptstrahlteiler ausgerüstet ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein Ausführungsbeispiel eines Mikroskops mit einem erfindungsgemäßen akustooptische Hauptstrahlteiler,
- Fig. 2: ein Ausführungsbeispiel eines erfindungsgemäßen, akustooptischen Hauptstrahlteilers,
- Fig. 3: ein erstes Vergleichsbeispiel eines erfindungsgemäße Merkmale aufweisenden, akustooptischen Hauptstrahlteilers,
- Fig. 4: ein zweites Vergleichssbeispiel eines erfindungsgemäße Merkmale aufweisenden, akustooptischen Hauptstrahlteilers,
- Fig. 5: ein drittes Vergleichsbeispiel eines erfindungsgemäße Merkmale aufweisenden, akustooptischen Hauptstrahlteilers in Bezug auf die Behandlung des Detektionslicht,
- Fig. 6: das dritte Vergleichsbeispiel in Bezug auf das Lenken des Beleuchtungslichts, und
- Fig. 7: das dritte Vergleichsbeispiel in Bezug auf eine spezielle Verwendungsmöglichkeit in der STED-Mikroskopie.

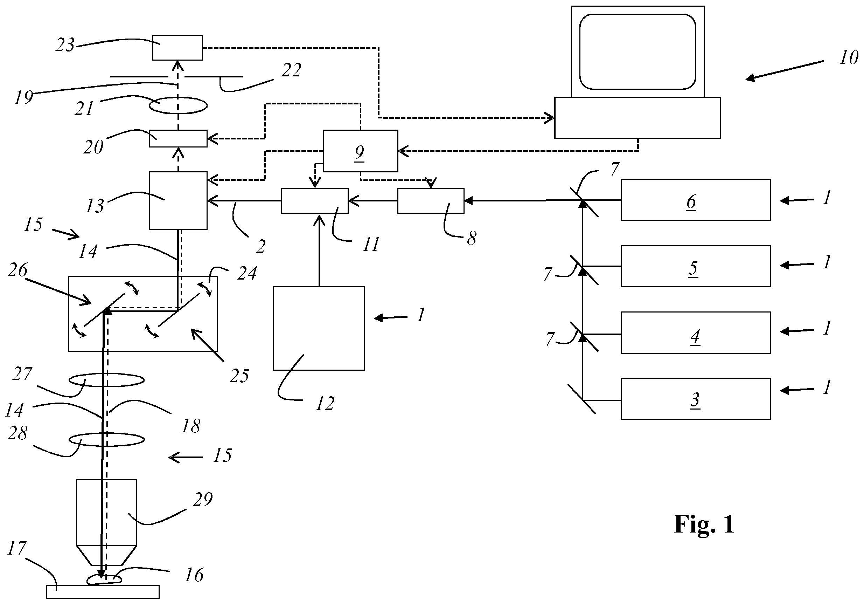

Fig. 1 zeigt ein als konfokales Scanmikroskop ausgebildetes Mikroskop, das mit einem erfindungsgemäßen, akustooptischen Hauptstrahlteiler ausgerüstet ist.

Das Mikroskop beinhaltet mehrere Lichtquellen 1, deren Licht zu einem kollinearen Primärlichtbündel 2 vereinigt wird. Konkret beinhaltet das Mikroskop einen Diodenlaser 3, einen, vorzugsweise diodengepumpten, Festkörperlaser 4 (DPSS-Laser; diode pumped solid state laser), einen Helium-Neon-Laser 5 und einen Argonionen-Laser 6, deren Emissionslichtbündel mit Hilfe von dichroitischen Strahlteilern 7 vereinigt werden. Die vereinigten Emissionslichtbündel gelangen anschließend zu einem AOTF 8 (acousto optical tunable filter), der es erlaubt, aus dem vereinigten Emissionslichtbündel Licht bestimmter Wellenlängen auszuwählen und weiter zu leiten. Hierzu wird der AOTF 8 mit elektromagnetischen Hochfrequenzwellen einer Hochfrequenzquelle 9 beaufschlagt, wobei der Benutzer durch Eingabe über einen PC 10 festlegen kann, welche Wellenlänge bzw. welche Wellenlängen das weitergeleitete Licht aufweisen soll und wobei die Frequenz der Hochfrequenzquelle 9 automatisch von dem Mikroskop entsprechend eingestellt wird. Innerhalb des AOTF 8 werden mit Hilfe der elektromagnetischen Hochfrequenzwellen mechanische Wellen zum Beugen des gewünschten Lichtes erzeugt.

Das Mikroskop weist darüber hinaus einen akustooptischen Strahlvereiniger 11 auf, der einerseits das von dem AOTF 8 weitergeleitete Licht und andererseits das Licht einer Weißlichtquelle 12 empfängt.

Eine solche Weißlichtquelle 12 kann insbesondere ein spezielles optisches Element, wie beispielsweise ein mikrostrukturiertes optisches Element und/oder eine tapered Faser und/oder eine photonische Kristallfaser und/oder einen photonischen Kristall und/oder ein Photonic-Band-Gap-Material und/oder ein vergleichbares, optisches Nichtlinearitäten induzierendes Element, aufweisen, das einfallendes Primärlicht, insbesondere das Licht eines Pulslasers, spektral verbreitert. Eine solche Lichtquelle kann Primärlichts einer spektralen Breite von mehreren 10 nm, insbesondere von mehreren 100 nm, zur Verfügung stellen.

Der akustooptische Strahlvereiniger 11 ist ebenfalls mit elektromagnetischen Hochfrequenzwellen beaufschlagt, die von der Hochfrequenzquelle 9 bereitgestellt werden. Der akustooptische Strahlvereiniger 11 beinhaltet ein akustooptisches Element, in dem mit den elektromagnetischen Hochfrequenzwellen mechanische Wellen zum Ablenken oder Beugen von Lichtstrahlen derart erzeugbar sind, dass das von dem AOTF 8 weitergeleitete Licht und das Licht der Weißlichtquelle 12 den akustooptische Strahlvereiniger 11 als vereinigtes Primärlichtbündel kollinear zueinander verlassen.

Das Mikroskop beinhaltet außerdem eine akustooptische Hauptstrahlteiler 13, die Aufgabe hat, Beleuchtungslicht 14 einer gewünschten Wellenlänge oder Beleuchtungslicht 14 mehrerer gewünschter Wellenlängen auf einen Beleuchtungslichtstrahlengang 15 zu lenken, und andererseits die Aufgabe, aus dem, von der beleuchteten Probe 16, die auf einem Objekttisch 17 angeordnet ist, ausgehenden, polychromatischen und kollinearen Detektionslichtbündel 18 (gestrichelt gezeichnet) die Anteile von an der Probe 16 gestreutem und/oder reflektiertem Beleuchtungslicht 15 zu entfernen.

Das von dem akustooptischen Hauptstrahlteiler 13 auf den Beleuchtungsstrahlengang 15 gelenkte Beleuchtungslicht 14 gelangt zu einer Strahlablenkeinrichtung 24 die einen ersten Galvanometerspiegel 25 und einen zweiten Galvanometerspiegel 26 beinhaltet. Der übrige Teil des Primärlichtes 2 wird von der mechanischen Welle bzw. den mechanischen Wellen nicht beeinflusst und gelangt in Strahlfallen (nicht eingezeichnet).

Nach dem Verlassen der Strahlablenkeinrichtung 24 gelangt das Beleuchtungslicht 14 zur Scanlinse 27, dann zur Tubuslinse 28 und schließlich zu einem Objektiv 29, das das Beleuchtungslicht 14 auf bzw. in die Probe 16 fokussiert.

Die Strahlablenkeinrichtung 24 führt den Fokus des Beleuchtungslichts 14 vorzugsweise mäanderförmig über bzw. durch die Probe 16. Hierbei ist der Galvanometerspiegel 25 für die Ablenkung in X-Richtung zuständig, während der zweite Galvanometerspiegel 26 für die Ablenkung in Y-Richtung zuständig ist.

Auch der akustooptische Hauptstrahlteiler 13 ist mit wenigstens einer elektromagnetischen Hochfrequenzwelle beaufschlagt, um wenigstens eine mechanische Welle einer Frequenz zu erzeugen. Durch Ändern der Frequenz der elektromagnetischen Hochfrequenzwelle kann die Frequenz der mechanischen Welle geändert werden. Die Erzeugung der mechanischen Welle kann beispielsweise mit Hilfe eines Piezo-Schallerzeugers das erfolgen.

Ein Kristall (in dieser Figur nicht dargestellt) des akustooptischen Hauptstrahlteilers 13, in dem die mechanische Welle propagiert, und die Ausbreitungsrichtung der mechanischen Welle sind zu dem von der Probe 16 kommenden Detektionslichtbündel 18 derart ausgerichtet, dass der akustooptische Hauptstrahlteiler 13 mit der mechanischen Welle sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall kollinear und gelangt nach Passieren eines AONF 20 (acousto optical notch filters), einer Abbildungsoptik 21 und einer Detektionslochblende 22 zu einem Detektor 23, der vorzugsweise als Multibanddetektor ausgeführt ist. Die elektrischen Signale des Detektors 23 werden zur Weiterverarbeitung und Auswertung an den PC 10 übergeben.

Das Mikroskop ist derart ausgestaltet, dass nicht nur Licht einer Wellenlänge als Beleuchtungslicht 14 auf den Beleuchtungsstrahlengang 15 gelenkt werden kann und nicht lediglich Licht einer Wellenlänge aus dem von der Probe 16 kommenden Detektionslichtbündel 18 entfernt werden kann, sondern dass mehrere mechanische Wellen gleichzeitig zum Entfernen von Beleuchtungslicht mehrerer unterschiedlicher Wellenlängen - und beider Linearpolarisationsrichtungen - aus dem Detektionslicht und/oder zum Lenken von Beleuchtungslicht mehrerer unterschiedlicher Wellenlängen - und beider Linearpolarisationsrichtungen - auf den Beleuchtungsstrahlengang zum Einsatz kommen, wobei jedoch in vorteilhafter Weise pro Beleuchtungslichtwellenlänge in dem Kristall des akustooptischen Hauptstrahlteilers 13 lediglich eine einzige mechanische Welle erzeugt wird.

Der akustooptische Hauptstrahlteilers 13 wird für jede vom Benutzer gewünschte Beleuchtungslichtwellenlänge mit einer eigenen elektromagnetischen Hochfrequenzwelle beaufschlagt, die von der Hochfrequenzquelle 9 erzeugt wird. Der Vollständigkeit halber sei erwähnt, dass die unterschiedlichen Hochfrequenzwellen, die die Hochfrequenzquelle 9 für den AONF 20, den akustooptischen Strahlvereiniger 11, den AOTF 8 und für den akustooptischen Hauptstrahlteiler 13 bereitstellt, in aller Regel unterschiedliche Frequenzen aufweisen. Es ist jedoch auch möglich die akustooptischen Bauteile derart auszubilden, dass zwei Hochfrequenzwellen derselben Frequenz für wenigstens von zwei akustooptischen Bauteile verwendet werden können.

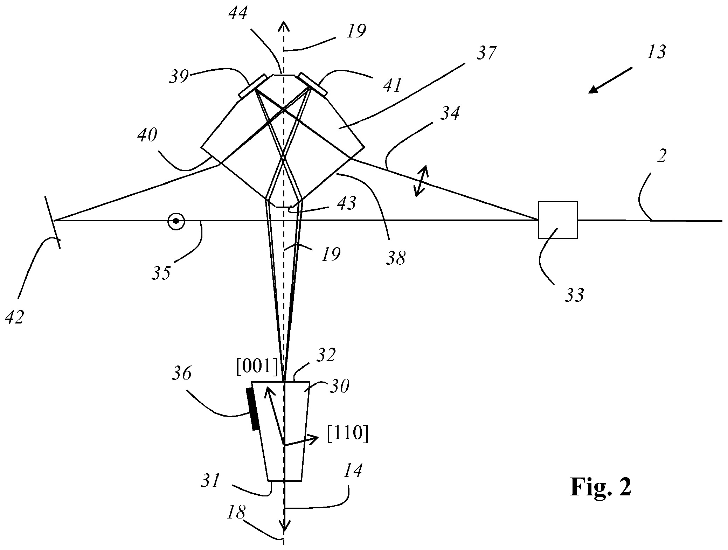

Fig. 2 zeigt schematisch ein Ausführungsbeispiel eines akustooptischen Hauptstrahlteilers 13.

Der akustooptische Hauptstrahlteilers 13 beinhaltet einen Polarisationsstrahlteiler 33, der unpolarisiertes Primärlicht mehrerer Wellenlängen, insbesondere unpolarisiertes, breitbandiges Primärlicht 2, beispielsweise einer Weißlichtquelle, empfängt. Der Polarisationsstrahlteiler 33 spaltet das Primärlicht 2 in ein erstes Primärlichtbündel 34 und ein zweites Primärlichtbündel 35 räumlich auf, wobei das Licht der Primärlichtbündel 34, 35 zueinander senkrechte Linearpolarisationsrichtungen aufweist.

Der akustooptische Hauptstrahlteilers 13 beinhaltet einen Kristall 30 mit einer Eintrittsfläche 31 für das von einer Probe (hier nicht dargestellt) kommende Detektionslichtbündel 18 (gestrichelt eingezeichnet) und mit einer Austrittsfläche 32 für den verbliebenen Anteil 19 des Detektionslichtbündels 18, der letztlich zu einem Detektor (hier nicht eingezeichnet) geleitet wird. Die Austrittsfläche 32 für den verbliebenen Anteil 19 ist gleichzeitig die Eintrittsfläche zum Einkoppeln des ersten Primärlichtbündels 34 und des zweiten Primärlichtbündels 35 in den Kristall 30.

An dem Kristall 30 ist ein Piezo-Schallerzeuger 36 angeordnet, der mit einer elektromagnetischen Hochfrequenzwelle einer Frequenz oder mit mehreren elektromagnetischen Hochfrequenzwellen mehrerer Frequenzen zur Erzeugung einer mechanischen Welle bzw. mehrerer unterschiedlicher mechanischen Wellen beaufschlagt wird. Mit Hilfe der mechanischen Welle bzw. mit Hilfe der mehreren mechanischen Wellen können sowohl aus dem ersten Primärlichtbündel 34, als auch aus dem zweiten Primärlichtbündel 35 die Lichtanteile einer gewünschten Beleuchtungslichtwellenlänge bzw. die Lichtanteile mehrerer gewünschter Beleuchtungslichtwellenlängen durch Beugung abgelenkt und damit kollinear auf einen Beleuchtungsstrahlengang 15 gelenkt werden, wobei jeweils einer Frequenz der jeweiligen mechanischen Welle (insb. jeweils zur Erfüllung der Bragg-Bedingung) eine der Beleuchtungslichtwellenlängen - gleichzeitig für beide Linearpolarisationsrichtungen - zugeordnet ist.

Das Beleuchtungslicht 14 verlässt den Kristall 30 durch die Eintrittsfläche 31 für das Detektionslichtbündel 18, die somit gleichzeitig die Austrittsfläche für das Beleuchtungslicht 14 ist.

Gleichzeitig wird mit Hilfe der mechanischen Welle bzw. mit Hilfe der mechanischen Wellen aus dem Detektionslichtbündel 18 (gestrichelt gezeichnet) der Lichtanteil entfernt, der die Wellenlänge bzw. der die Wellenlängen des Beleuchtungslichts 14 aufweist, wobei der Kristall 30 und die Ausbreitungsrichtung der mechanischen Welle(n) zu dem von der Probe 16 kommenden Detektionslichtbündel 18 derart ausgerichtet sind, dass jede der mechanischen Wellen sowohl den die Beleuchtungswellenlänge und eine erste Linearpolarisationsrichtung aufweisenden Anteil des Detektionslichtbündels 18, als auch den die Beleuchtungswellenlänge und eine zweite, zur ersten Linearpolarisationsrichtung senkrechten Linearpolarisationsrichtung aufweisenden Anteil des Detektionslichtbündels 18 ablenkt und dadurch aus dem Detektionslichtbündel 18 entfernt. Der verbliebene Anteil 19 des Detektionslichtbündels 18 verlässt den Kristall durch die Austrittsfläche 32 kollinear. In der Figur ist die Ausrichtung der Kristallstruktur durch Einzeichnung der Kristallachsen [001] und [110] schematisch angedeutet.

Das erste Primärlichtbündel 34 wird entgegengesetzt der Richtung der ersten Beugungsordnung des ordentlichen Lichtes (bezogen auf den gebeugten Anteil des Detektionslichtes) in den Kristall 30 eingekoppelt, während das zweite Primärlichtbündel 35 entgegengesetzt der Richtung der ersten Beugungsordnung des außerordentlichen Lichts (bezogen auf den gebeugten Anteil des Detektionslichtes) in den Kristall 30 eingekoppelt wird. Auf diese Weise steht das gesamte Primärlicht 2 zur Verfügung, um aus diesem Primärlicht 2 Beleuchtungslicht 14 einer bestimmten Wellenlänge oder bestimmter Wellenlängen mit Hilfe des akustooptischen Hauptstrahlteilers auf den Beleuchtungslichtstrahlengang des Mikroskops und damit zur Probe zu lenken, wobei für jede Wellenlänge lediglich eine einzige mechanische Welle einer einzigen Frequenz benötigt wird.

Um eine Kollinearität des aus dem Kristall 30 austretenden Beleuchtungslichtbündels 14 zu erreichen, ist dem Kristall 30 ein dispersives optisches Bauteil 37 vorgeschaltet, das das erste Primärlichtbündel 34 und das zweite Primärlichtbündel 35 räumlich und spektral aufspaltet, wobei das Ausmaß der räumlichen Aufspaltung (insbesondere durch Auswahl der Winkel und/oder der optischen Weglängen) derart festgelegt ist, dass sie von dem Kristall 30 wieder rückgängig gemacht wird.

Das dispersive optische Bauteil 37 weist ein Ein- und Auskoppelfenster 38 für das erste Primärlichtbündel 34 auf. Zunächst tritt das erste Primärlichtbündel 34 durch das Ein- und Auskoppelfenster 38 in das dispersive optische Bauteil 37 ein und wird nach Durchlaufen des dispersiven optischen Bauteils 37 von einem ersten Spiegel 39, der an einer dem Ein- und Auskoppelfenster 38 gegenüberliegenden Fläche angebracht ist, reflektiert, bevor das erste Primärlichtbündel 34 räumlich und spektral aufgespalten das dispersive optische Bauteil 37 durch das Ein- und Auskoppelfenster 38 wieder verlässt.

Analog weist das dispersive optische Bauteil 37 ein weiteres Ein- und Auskoppelfenster 40 für das von einem Umlenkspiegel 42 umgelenkte zweite Primärlichtbündel 35 auf. Zunächst tritt das zweite Primärlichtbündel 35 durch das weitere Ein- und Auskoppelfenster 40 in das dispersive optische Bauteil 37 ein und wird nach Durchlaufen des dispersiven optischen Bauteils 37 von einem zweiten Spiegel 41, der an einer dem weiteren Ein- und Auskoppelfenster 40 gegenüberliegenden Fläche angebracht ist, reflektiert, bevor das zweite Primärlichtbündel 35 räumlich und spektral aufgespalten das dispersive optische Bauteil 37 durch das weitere Ein- und Auskoppelfenster 40 wieder verlässt.

Das dispersive optische Bauteil 37 weist außerdem eine Einkoppelfläche 43 und eine dazu parallele Auskoppelfläche 44 für den verbliebenen Anteil 19 des Detektionslichtbündels 18 auf. Der verbliebene Anteil 19 des Detektionslichtbündels 18 tritt lotrecht sowohl durch die Einkoppelfläche 43 und die parallele Auskoppelfläche 44 und erfährt daher keine spektrale Aufspaltung.

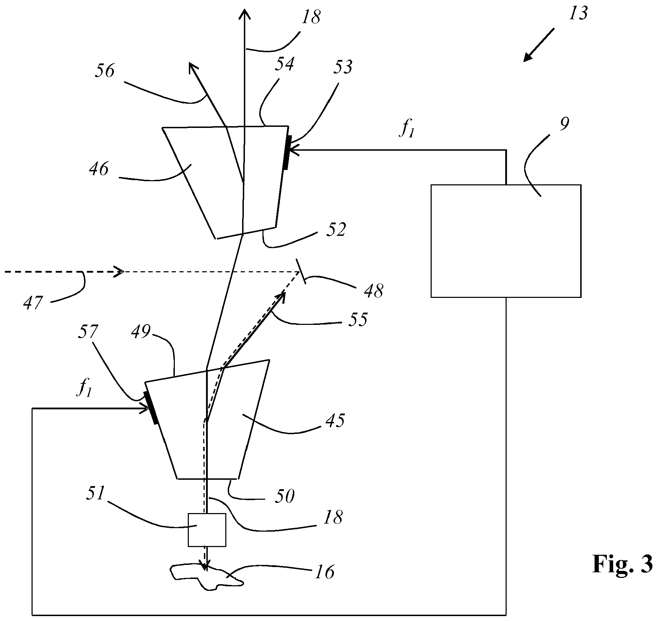

Fig. 3 zeigt ein erstes Vergleichsbeispiel eines erfindungsgemäßen, akustooptischen Hauptstrahlteilers 13, der einen ersten Kristall 45 und einen zweiten Kristall 46 aufweist.

Der dargestellte akustooptische Hauptstrahlteiler 13 empfängt ein Primärlichtbündel 47 einer nicht dargestellten Lichtquelle, das Licht mehrerer Wellenlängen beinhaltet. Das Primärlichtbündel wird mithilfe eines Spiegels 48 in Richtung auf den ersten Kristall 45 umgelenkt und tritt in diesen durch ein Austrittsfenster 49 ein. Der Klarstellung halber sei erwähnt, dass der Begriff Austrittsfenster willkürlich deshalb gewählt wurde, weil durch dieses Fenster das von der Probe kommende Detektionslicht aus dem ersten Kristall 45 austritt, was nachfolgend noch näher beschrieben ist.

An dem ersten Kristall 45 ist ein erster Piezo-Schallerzeuger 57 angeordnet, der mit einer elektromagnetischen Hochfrequenzwelle der Frequenz f1 einer Hochfrequenzquelle 9 beaufschlagt ist und der eine durch den ersten Kristall 45 propagierende (nicht dargestellte) mechanische Welle einer der Frequenz f1 entsprechenden Schallfrequenz erzeugt.

Durch Wechselwirkung mit der mechanischen Welle wird Beleuchtungslicht einer der Schallfrequenz zugeordneten Bleuchtungslichtwellenlänge zur Beleuchtung einer Probe 16 auf einen Beleuchtungsstrahlengang abgelenkt. Das abgelenkte Beleuchtungslicht verlässt den ersten Kristall 45 durch ein Eintrittsfenster 50 und gelangt über eine Scan- und Optikanordnung 51 eines Mikroskops, die insbesondere wenigstens eine Scaneinrichtung und ein Mikroskopobjektiv beinhaltet, zu der zu leuchtenden Probe 16.

Das von der Probe 16 ausgehende Detektionslichtbündel 18 gelangt auf umgekehrtem Lichtweg zu dem ersten Kristall 45 zurück und tritt in diesen durch das Eintrittsfenster 50 ein. Durch Wechselwirkung mit der mechanischen Welle wird ein erster Teil 55 des Detektionslichts, der die Bleuchtungslichtwellenlänge und eine erste Linearpolarisationsrichtung aufweist, abgelenkt und dadurch aus dem Detektionslichtbündel 18 entfernt. Der verbliebene Teil des Detektionslichtbündels 18 tritt durch das Austrittsfenster 49 aus dem ersten Kristall aus und gelangt anschließend zum Eintrittsfenster 52 des zweiten Kristalls 46.

An dem zweiten Kristall 46 ist ein zweiter Piezo-Schallerzeuger 53 angeordnet, der ebenfalls mit einer elektromagnetischen Hochfrequenzwelle der Frequenz f1 der Hochfrequenzquelle 9 beaufschlagt ist und der eine durch den zweiten Kristall 45 propagierende (nicht dargestellte) zweite mechanische Welle einer der Frequenz f1 entsprechenden Schallfrequenz erzeugt.

Durch Wechselwirkung mit der zweiten mechanischen Welle, die in dem zweiten Kristall 46 propagiert, wird ein zweiter Teil 56 des Detektionslichts, der die Bleuchtungslichtwellenlänge und eine zweite, zur ersten Linearpolarisationsrichtung senkrechte Linearpolarisationsrichtung aufweist, abgelenkt und dadurch aus dem Detektionslichtbündel 18 entfernt. Der verbliebene Teil des Detektionslichtbündels 18 tritt durch das Austrittsfenster 54 aus dem zweiten Kristall 46 aus und gelangt anschließend zu einem nicht dargestellten Detektor.

Dass mit Schallwellen derselben Schallfrequenz in beiden Kristallen 45, 46 nacheinander sowohl der erste Teil 55 des Detektionslichts, der die Bleuchtungslichtwellenlänge und eine erste Linearpolarisationsrichtung, als auch der zweite Teil 56 des Detektionslichts, der die Bleuchtungslichtwellenlänge und eine zweite, zur ersten Linearpolarisationsrichtung senkrechte Linearpolarisationsrichtung aufweist, abgelenkt werden kann ist dadurch erreicht, dass, die Kristalle 45, 46 hinsichtlich wenigstens eines Parameters, wie beispielsweise Kristallschnitt und/oder Kristallausrichtung und/oder Ausbreitungsrichtungen der mechanischen Welle und des Lichtes, derart verschieden und aufeinander abgestimmt sind, dass jeweils die Bragg-Bedingung für das abzulenkende Licht erfüllt ist.

Die Kristalle sind derart ausgebildet und angeordnet, dass das dem Detektor zuzuführende Detektionslicht den Hauptstrahlteiler 13 als kollineares Lichtbündel verlässt.

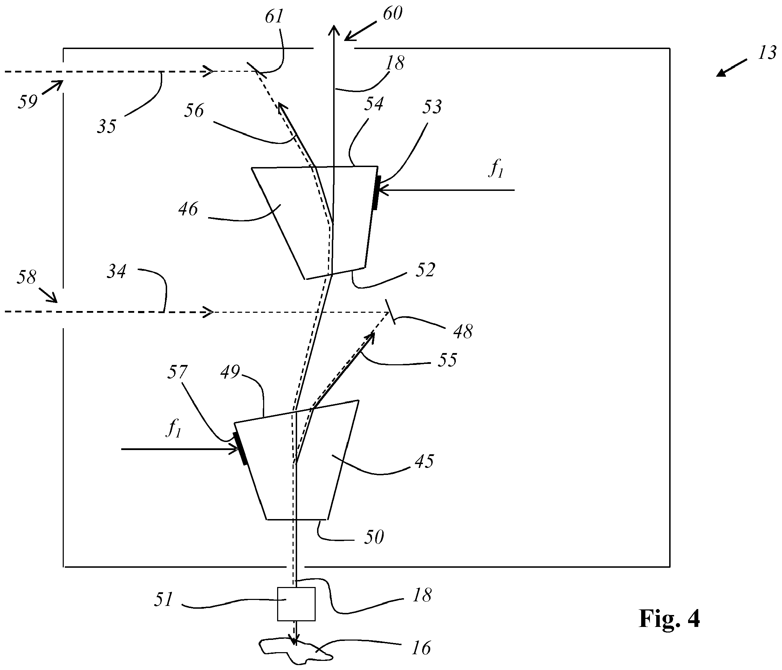

Fig. 4 zeigt ein zweites Vergleichsbeispiel eines erfindungsgemäßen, akustooptischen Hauptstrahlteilers 13.

Dieser akustooptische Hauptstrahlteiler 13 ist im Wesentlichen ähnlich aufgebaut ist, wie der in Fig. 3 dargestellte Hauptstrahlteiler 13, wobei jedoch durch einen ersten Eingang 58 ein erstes Primärlichtbündel 33, als auch durch einen zweiten Eingang 59 und über einen Umlenkspiegel 61 ein zweites Primärlichtbündel 35 eingekoppelt werden. Das erste Primärlichtbündel 34 weist eine erste Linearpolarisationsrichtung auf, während das zweite Primärlichtbündel 35 eine zweite, zur ersten Linearpolarisationsrichtung senkrechte Linearpolarisationsrichtung aufweist. Durch Wechselwirkung mit den in den Kristallen 45, 46 propagierenden mechanischen Wellen wird aus jedem der Primärlichtbündel 34, 35 der Anteil auf den Beleuchtungsstrahlengang zur Beleuchtung einer Probe 16 gelenkt werden, der die den Schallfrequenzen zugeordnete Wellenlänge aufweist.

Das dem (nicht dargestellten) Detektor zuzuführende Detektionslicht verlässt den Hauptstrahlteiler 13 als kollineares Lichtbündel durch einen Ausgang 60.

Durch Ändern der Schallfrequenz können Anteile einer anderen Wellenlänge auf den Beleuchtungsstrahlengang zur Beleuchtung einer Probe 16 gelenkt werden.

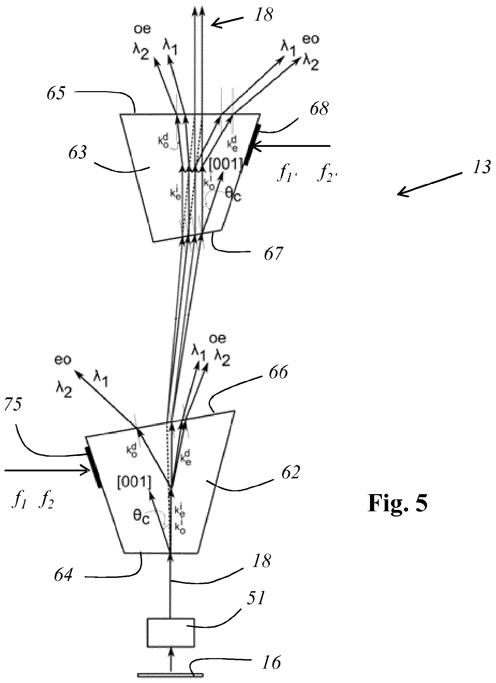

Fig. 5 zeigt ein drittes Vergleichsbeispiel eines erfindungsgemäßen, akustooptischen Hauptstrahlteilers 13, wobei jedoch der besseren Übersichtlichkeit halber lediglich der Verlauf des von der Probe 16 kommenden Detektionslichtes und das Entfernen der Anteile, die die Beleuchtungslichtwellenlängen λ1 und λ2 aufweisen, aus dem von der Probe 16 kommenden Detektionslicht dargestellt ist.

Der akustooptische Hauptstrahlteilers 13 weist einen ersten Kristall 62 auf, an dem ein erster Piezo-Schallerzeuger 75 angeordnet ist, der mit zwei elektromagnetischen Hochfrequenzwellen der Frequenzen f1 und f2 beaufschlagt ist und der zwei durch den ersten Kristall 62 propagierende (nicht dargestellte) mechanische Wellen jeweils einer der Frequenzen f1 und f2 entsprechenden Schallfrequenz erzeugt.

Der erste Kristall 62, hinsichtlich seiner Kristallstruktur, und die Ausbreitungsrichtungen der mechanischen Wellen sind relativ zueinander und jeweils relativ zu dem in den Kristall einfallenden Detektionslichtbündel 18 derart ausgerichtet, dass mit der mechanischen Welle sowohl der die Beleuchtungswellenlängen λ1 und λ2 und eine erste Linearpolarisationsrichtung aufweisende Anteil des Detektionslichtbündels 18, als auch der die Beleuchtungswellenlängen λ1 und λ2 und eine zweite, zur ersten Linearpolarisationsrichtung senkrechten Linearpolarisationsrichtung aufweisende Anteil des Detektionslichtbündels ablenkt und dadurch aus dem Detektionslichtbündel 18 entfernt werden.

Die entfernten Anteile sind in der Figur mit oe und eo bezeichnet. Die erste Linearpolarisationsrichtung ist bei diesem Ausführungsbeispiel die Linearpolarisationsrichtung des ordentlichen Lichtes bezogen auf eine Doppelbrechungseigenschaft des Kristalls 62, während die zweite Linearpolarisationsrichtung bei diesem Ausführungsbeispiel die Linearpolarisationsrichtung des außerordentlichen (extraordenary) Lichtes bezogen auf eine Doppelbrechungseigenschaft des Kristalls 62 ist. Durch die Bezeichnungen oe und eo soll zum Ausdruck gebracht werden, dass die Linearpolarisationsrichtung des einfallenden Detektionslichts jeweils um 90° (von ordinary nach extraordinary bzw. umgekehrt) durch die Wechselwirkung mit den mechanischen Wellen gedreht wird.

Der akustooptische Hauptstrahlteiler 13 weist außerdem einen zweiten Kristall 63 auf, der das aus dem ersten Kristall 62 austretende, verbliebene Detektionslicht empfängt. Dieses Detektionslicht ist räumlich sowohl hinsichtlich seiner Polarisation, als auch hinsichtlich seiner Wellenlänge aufgespalten. Der zweite Kristall 63 ist jedoch derart ausgestaltet, dass das aus ihm austretende Detektionslichtbündel 18, das einem (nicht dargestellten) Detektor zugeleitet wird, kolinear vereinigt ist. Dies ist dadurch erreicht, dass das Eintrittsfenster 64 des ersten Kristalls 62 parallel zum Austrittsfenster 65 des zweiten Kristalls 63 angeordnet ist und dass zusätzlich das Austrittsfenster 66 des ersten Kristalls 62 parallel zum Eintrittsfenster 67 des zweiten Kristalls 63 angeordnet ist.

Der zweite Kristall 63 dient zum einen dazu, möglicherweise noch im Detektionslicht - trotz der Wechselwirkung mit den mechanischen Wellen des ersten Kristalls 62 - verbliebene Anteile der Bleuchtungslichtwellenlängen λ1 und λ2 zu entfernen. Darüber hinaus kann der zweite Kristall 63 dazu dienen, wenigstens einen weiteren Eingang für auf die Probe zu lenkendes Beleuchtungslicht bereit zu stellen, was hier nicht näher dargestellt ist.

An dem zweiten Kristall 63 ist ein zweiter Piezo-Schallerzeuger 68 angeordnet ist, der mit zwei elektromagnetischen Hochfrequenzwellen der Frequenzen f1' und f2' beaufschlagt ist und der zwei durch den zweiten Kristall 63 propagierende (nicht dargestellte) mechanische Wellen jeweils einer der Frequenzen f1' und f2' entsprechenden Schallfrequenz erzeugt.

Der zweite Kristall 63, hinsichtlich seiner Kristallstruktur, und die Ausbreitungsrichtungen der mechanischen Wellen sind relativ zueinander und jeweils relativ zu dem in den Kristall einfallenden Detektionslichtbündel 18 derart ausgerichtet, dass mit der mechanischen Welle sowohl der die Beleuchtungswellenlängen λ1 und λ2 und eine erste Linearpolarisationsrichtung aufweisende Anteil des Detektionslichtbündels 18, als auch der die Beleuchtungswellenlängen λ1 und λ2 und eine zweite, zur ersten Linearpolarisationsrichtung senkrechten Linearpolarisationsrichtung aufweisende Anteil des Detektionslichtbündels ablenkt und dadurch aus dem Detektionslichtbündel 18 entfernt werden.

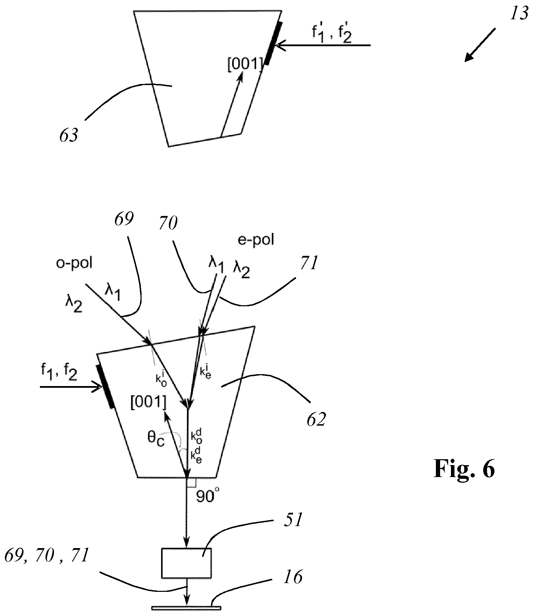

Fig. 6 zeigt, wie Beleuchtungslicht der Bleuchtungslichtwellenlängen λ1 und λ2, das sowohl eine erste Linearpolarisationsrichtung, als auch eine zweite, von der ersten Linearpolarisationsrichtung verschiedene Linearpolarisationsrichtung aufweist, mit dem in Bezug auf Figur 3 bereits näher beschriebenen akustooptischen Hauptstrahlteiler 13 auf einen Beleuchtungsstrahlengang zur Beleuchtung einer Probe 16 gelenkt wird.

In der folgenden Beschreibung wird das Beleuchtungslicht ausschließlich über den ersten Kristall 62 und durch Wechselwirkung mit der in diesem Kristall 62 propagierenden (nicht dargestellten) mechanischen Wellen dargestellt. Es ist jedoch - alternativ oder zusätzlich - auch möglich, Beleuchtungslicht über den zweiten Kristall 63 einzukoppeln und auf den Beleuchtungsstrahlengang zur Beleuchtung einer Probe 16 zu lenken.

Das Einkoppeln des Beleuchtungslichts erfolgt auf dem Lichtweg, auf dem die die Bleuchtungslichtwellenlängen aufweisenden Anteile des Detektionslichts von dem Detektionslichtbündel 18 , wie in Figur 6 dargestellt, entfernt werden.

Aufgrund des besonderen Kristallschnitts des ersten Kristalls 62 wird ein erstes Beleuchtungslichtbündel 69, das eine erste Linearpolarisationsrichtung (in der Figur mit "o-pol" gekennzeichnet) und Anteile beider Bleuchtungslichtwellenlängen λ1 und λ2 aufweist, als kolineares Beleuchtungslichtbündel eingekoppelt. Durch Wechselwirkung mit den mechanischen Wellen wird das Licht auf einen Beleuchtungsstrahlengang zur Beleuchtung einer Probe 16 gelenkt. Es gelangt über eine Scan- und Optikanordnung 51 eines Mikroskops, die insbesondere wenigstens eine Scaneinrichtung und ein Mikroskopobjektiv beinhaltet, zu der zu beleuchtenden Probe 16.

Darüber hinaus wird ein zweites Beleuchtungslichtbündel 70, das Licht der Bleuchtungslichtwellenlänge λ1 und die zweite Linearpolarisationsrichtung aufweist, sowie ein drittes Beleuchtungslichtbündel 71, das Licht der Bleuchtungslichtwellenlänge λ2 und ebenfalls die zweite Linearpolarisationsrichtung aufweist, als räumlich separate Beleuchtungslichtbündel 70, 71 ein gekoppelt. Auch das Licht dieser Beleuchtungslichtbündel 70, 71 gelangt durch Wechselwirkung mit den mechanischen Wellen, die in dem ersten Kristall 62 propagieren, auf den Beleuchtungsstrahlengang und über die Scan- und Optikanordnung 51 eines Mikroskops zu der Probe 16.

Licht, das nicht die Bleuchtungslichtwellenlänge λ1 oder die Bleuchtungslichtwellenlänge λ2 aufweist, wird nicht auf den Beleuchtungsstrahlengang, sondern in eine nicht dargestellte Strahlfalle gelenkt.

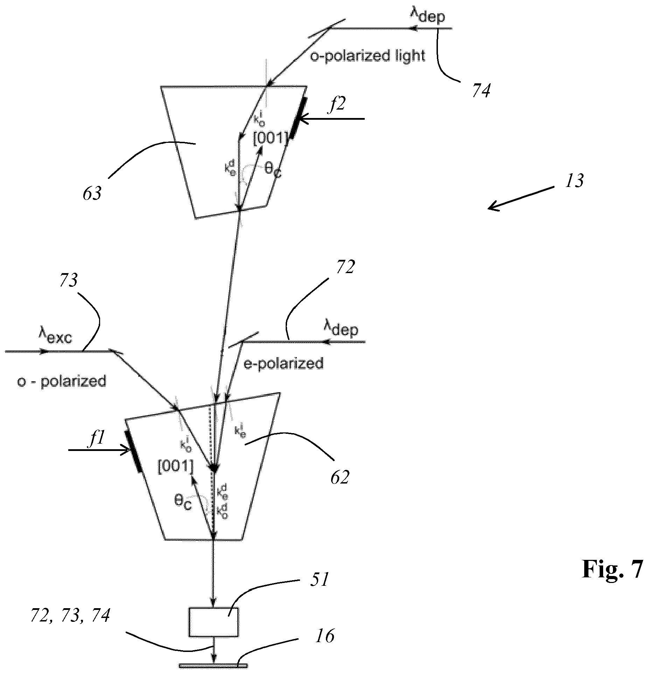

Fig. 7 zeigt das dritte Vergleichsbeispiel in Bezug auf eine spezielle Verwendungsmöglichkeit in der STED-Mikroskopie, wobei lediglich der Verlauf des Beleuchtungslichtes, mit dem die Probe beaufschlagt wird, eingezeichnet ist, jedoch - der besseren Übersichtlichkeit halber - nicht der Verlauf des Detektionslichtes.

Das Auflösungsvermögen eines konfokalen Scanmikroskops ist unter anderem durch die Intensitätsverteilung und die räumliche Ausdehnung des Fokus des Anregungslichtbündels in der Probe gegeben. Eine Anordnung zur Steigerung des Auflösungsvermögens für Fluoreszenzanwendungen ist aus der WO 95/21393 A1 bekannt. Hierbei werden die lateralen Randbereiche des Fokusvolumens des Anregungslichtbündels mit dem, ggf. besonders geformten, Fokus eines weiteren Lichtbündels einer anderen Wellenlänge, dem sog. Abregungslichtbündel, beleuchtet, um dort die vom Anregungslichtbündel angeregten Probenbereiche stimuliert in den Grundzustand zurück zu bringen. Detektiert wird dann nur das spontan emittierte Licht aus den nicht vom Abregungslichtbündel beleuchteten Bereichen, so daß insgesamt eine Auflösungsverbesserung erreicht wird. Für dieses Verfahren hat sich die Bezeichnung STED (Stimulated Emission Depletion) eingebürgert.

Bei dem in Fig. 7 dargestellten Vergleichsbeispiel wird der akustooptische Strahlteiler 13 dazu genutzt, sowohl zwei, aus unterschiedlichen Richtungen kommenden Anregungslichtbündel 72, 73 jeweils der Wellenlänge λexc und unterschiedlicher Linearpolarisation, als auch Abregungslicht der Wellenlänge λdep auf einen Beleuchtungsstrahlengang zur Beleuchtung einer Probe 16 zu lenken.

Der Piezo-Schallerzeuger 75 des ersten Kristalls 62 ist mit einer Hochfrequenzwelle der Frequenz f1 beaufschlagt und erzeugt eine durch den ersten Kristall 62 propagierende (nicht dargestellte) mechanische Welle einer der Frequenzen f1 entsprechenden Schallfrequenz.

Das Anregungslicht wird über den ersten Kristall 62 und das Abregungslicht über den zweiten Kristall 63 eingekoppelt. Das Anregungslicht wird in Form eines ersten Anregungslichtbündels 72, das eine erste Linearpolaristionsrichtung (außerordentliche Linearpolarisation bezogen auf die Doppelbrechungseigenschaft des ersten Kristalls 62), und eines zweiten Anregungslichtbündels 73, das eine zur ersten Linearpolaristionsrichtung senkrechte Linearpolaristionsrichtung (ordentliche Linearpolarisation bezogen auf die Doppelbrechungseigenschaft des ersten Kristalls 62) eingekoppelt. Beide Anregungslichtbündel 72, 73 werden durch Wechselwirkung mit der mechanischen Welle abgelenkt und koaxial zueinander verlaufend auf den Beleuchtungsstrahlengang zur Beleuchtung der Probe 16 gelenkt.

Der Piezo-Schallerzeuger 68 des zweiten Kristalls 63 ist mit einer Hochfrequenzwelle der Frequenz f2 beaufschlagt und erzeugt eine durch den zweiten Kristall 63 propagierende (nicht dargestellte) mechanische Welle einer der Frequenzen f2 entsprechenden Schallfrequenz. Durch Wechselwirkung mit dieser mechanischen Welle wird das Abregungslichtbündel 74 der Wellenlänge λdep, das eine ordentlich Linearpolarisationsrichtung bezogen auf die Doppelbrechungseigenschaft des zweiten Kristalls 63 aufweist, auf den Beleuchtungsstrahlengang gelenkt und gelangt schließlich zur Probe 16.

Es wäre zusätzlich möglich, ein weiteres Abregungslichtbündel, mit einer zur Linearpolarisationsrichtung des Abregungslichtbündels 74 senkrechten Linearpolarisationsrichtung, einzukoppeln. Dies beispielsweise, um mit dem weiteren Abregungslrichtbündel in einem anderen Probenbereich stimulierte Emission zu bewirken, als mit dem Abregungslichtbündel 74.

Auch bei diesem Ausführungsbeispiel werden, unabhängig von deren Polarisation, die Anteile des Detektionslichtes aus dem von der Probe ausgehenden Detektionslichtbündel entfernt, die die Wellenlänge des Beleuchtungslichts aufweisen.

Jedoch wird, wie zuvor ausführlich beschrieben, auch bei diesem Ausführungsbeispiel die Anteile aus dem vom der Probe kommenden Detektionslichtbündel entfernt, welches die Wellenlänge λexc des Anregungslichts aufweist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Akustooptischer Hauptstrahlteiler (13) für ein Scanmikroskop, der dazu ausgebildet und bestimmt ist, Beleuchtungslicht (14) einer vorgewählten oder vorwählbaren Beleuchtungslichtwellenlänge auf einen Beleuchtungsstrahlengang (15) zur Beleuchtung einer Probe (16) zu lenken und von einer Probe (16) kommendes Detektionslicht (18) auf einen Detektionsstrahlengang zu lenken, wobei in einem Kristall (30) des akustooptischen Hauptstrahlteilers (13) eine mechanische Welle einer der Beleuchtungslichtwellenlänge zugeordneten Schallfrequenz propagiert oder mehprere mechanische Wellen, die dieselbe, der Beleuchtungslichtwellenlänge zugeordnete Schallfrequenz aufweisen, propagieren, **dadurch gekennzeichnet, dass** der akustooptische Hauptstrahlteiler (13) wenigstens ein dispersives optisches Bauteil (37) aufweist, das eine wenigstens teilweise von dem Kristall (30) des akustooptischen Hauptstrahlteilers (13), durch den die mechanische Welle propagiert, hervorgerufene räumliche Farbaufspaltung eines Primärlichtes (2) und/oder des Beleuchtungslichtes (14) kompensiert und eine erste Eintrittsfläche (38) für Licht mit einer ersten Linearpolarisationsrichtung und eine zweite Eintrittsfläche (40) für Licht mit einer zweiten, zur ersten Linearpolarisationsrichtung senkrechten Linearpolarisationsrichtung aufweist, wobei
a. aus dem von einer Probe (16) kommenden Detektionslichtbündel (18) durch Wechselwirkung mit der einen mechanischen Welle oder durch Wechselwirkung mit den mechanischen Wellen sowohl ein die Beleuchtungslichtwellenlänge und eine erste Linearpolarisationsrichtung aufweisender Anteil des Detektionslichtbündels (18), als auch ein die Beleuchtungslichtwellenlänge und eine zweite, zur ersten Linearpolarisationsrichtung senkrechte Linearpolarisationsrichtung aufweisender Anteil des Detektionslichtes abgelenkt - und dadurch aus dem Detektionslichtbündel (18) entfernt werden, und/oder dass
b. der akustooptische Hauptstrahlteiler (13) dazu ausgebildet ist, durch Wechselwirkung mit der einen mechanischen Welle oder durch Wechselwirkung mit den mechanischen Wellen sowohl den Anteil von Beleuchtungslicht, das die vorgewählte Beleuchtungslichtwellenlänge und eine erste Linearpolarisationsrichtung aufweist, als auch den Anteil von Beleuchtungslicht, das die vorgewählte Beleuchtungslichtwellenlänge und eine zweite, von der ersten Linearpolarisationsrichtung verschiedene, insbesondere senkrechte, Linearpolarisationsrichtung aufweist auf einen Beleuchtungsstrahlengang (15) zur Beleuchtung einer Probe (16) zu lenken.

2. Akustooptischer Hauptstrahlteiler (13) nach Anspruch 1, **dadurch gekennzeichnet, dass** der akustooptische Hauptstrahlteiler (13) einen ersten Kristall (45) und einen zweiten Kristall (46) aufweist, die derart angeordnet sind, dass sie nacheinander von dem Detektionslichtbündel (18) durchlaufen werden, wobei durch Wechselwirkung mit einer im ersten Kristall (45) vorhandenen ersten mechanischen Welle, die die Schallfrequenz aufweist, der die Beleuchtungslichtwellenlänge und die erste Linearpolarisationsrichtung aufweisende Anteil abgelenkt - und dadurch aus dem Detektionslichtbündel (18) entfernt wird und wobei durch Wechselwirkung mit einer im zweiten Kristall (46) vorhandenen zweiten mechanischen Welle, die ebenfalls die Schallfrequenz aufweist, der die Beleuchtungslichtwellenlänge und die zweite Linearpolarisationsrichtung aufweisende Anteil abgelenkt - und dadurch aus dem Detektionslichtbündel (18) entfernt wird.

3. Akustooptischer Hauptstrahlteiler (13) nach Anspruch 2, **dadurch gekennzeichnet, dass**
a. sich der erste Kristall (45) in Form und/oder Größe und/oder Kristallschnitt vom zweiten Kristall (46) unterscheidet und/oder dass
b. die Ausrichtung der Ausbreitungsrichtung des Detektionslichtbündels (18) relativ zur Gitterstruktur des ersten Kristalles (45) von der Ausrichtung der Ausbreitungsrichtung des Detektionslichtbündels (18) relativ zur Gitterstruktur des zweiten Kristalles (46) verschieden ist und/oder dass
c. die Ausrichtung der Ausbreitungsrichtung der ersten mechanischen Welle relativ zur Gitterstruktur des ersten Kristalles (45) von der Ausrichtung der Ausbreitungsrichtung der zweiten mechanischen Welle relativ zur Gitterstruktur des zweiten Kristalles (46) verschieden ist.

4. Akustooptischer Hauptstrahlteiler (13) nach Anspruch 2 oder 3, **dadurch gekennzeichnet, dass**
a. das Detektionslichtbündel (18) zuerst den ersten Kristall (45) und anschließend den zweiten Kristall (46) durchläuft und dass durch Wechselwirkung mit der mechanischen Welle des ersten Kristalls (45) Beleuchtungslicht (14) der Beleuchtungslichtwellenlänge auf einen Beleuchtungsstrahlengang (15) gelenkt wird und/oder dass
b. das Detektionslichtbündel (18) zuerst den ersten Kristall (45) und anschließend den zweiten Kristall (46) durchläuft und dass durch Wechselwirkung mit der mechanischen Welle des zweiten Kristalls (46) Beleuchtungslicht (14) der Beleuchtungslichtwellenlänge auf einen Beleuchtungsstrahlengang (15) gelenkt wird.

5. Akustooptischer Hauptstrahlteiler (13) nach einem der Ansprüche 1 bis 4, **dadurch gekennzeichnet, dass** der akustooptische Hauptstrahlteiler (13) einen Kristall (30) aufweist, in dem die mechanische Welle propagiert, wobei der Kristall (30) einerseits und die Ausbreitungsrichtung der mechanischen Welle andererseits relativ zueinander und jeweils relativ zu dem in den Kristall (30) einfallenden Detektionslichtbündel (18) derart ausgerichtet sind, dass der akustooptische Hauptstrahlteiler (13) mit der mechanischen Welle sowohl den die Beleuchtungswellenlänge und eine erste Linearpolarisationsrichtung aufweisenden Anteil des Detektionslichtbündels, als auch den die Beleuchtungswellenlänge und eine zweite, zur ersten Linearpolarisationsrichtung senkrechten Linearpolarisationsrichtung aufweisenden Anteil des Detektionslichtbündels (18) ablenkt und dadurch aus dem Detektionslichtbündel (18) entfernt.

6. Akustooptischer Hauptstrahlteiler (13) nach einem der Ansprüche 1 bis 5, **dadurch gekennzeichnet, dass**
a. die erste Linearpolarisationsrichtung die Linearpolarisationsrichtung des ordentlichen Lichtes bezogen auf eine Doppelbrechungseigenschaft des Kristalles (30) ist und/oder dass
b. die zweite Linearpolarisationsrichtung die Linearpolarisationsrichtung des außerordentlichen Lichtes bezogen auf eine Doppelbrechungseigenschaft des Kristalles (30) ist und/oder dass
c. die erste oder die zweite Linearpolarisationsrichtung in der Ebene angeordnet ist, die von der Ausbreitungsrichtung der mechanischen Welle und der Ausbreitungsrichtung des Detektionslichtbündels (18) aufgespannt ist.

7. Akustooptischer Hauptstrahlteiler (13) nach einem der Ansprüche 1 bis 6, **dadurch gekennzeichnet, dass** die strahlführenden Komponenten des Hauptstrahlteilers (13) derart angeordnet und ausgebildet sind, dass der verbliebene Teil des Detektionslichtbündels (18) den akustooptischen Hauptstrahlteiler (13) kollinear verlässt und/oder dass die Beleuchtungslichtbündel (14) der gewünschten Wellenlänge, unabhängig von ihrer Polarisationsrichtung, auf dem Beleuchtungslichtstrahlengang, auf den sie gelenkt wurden, kollinear vereinigt sind.

8. Akustooptischer Hauptstrahlteiler (13) nach einem der Ansprüche 1 bis 7, **dadurch gekennzeichnet, dass** der akustooptische Hauptstrahlteiler (13) einen ersten Kristall (45) und einen zweiten Kristall (46) aufweist, die insbesondere derart angeordnet sind, dass sie nacheinander von dem Detektionslichtbündel (18) durchlaufen werden, wobei durch Wechselwirkung mit einer im ersten Kristall (45) vorhandenen ersten mechanischen Welle, die die Schallfrequenz aufweist, Beleuchtungslicht, das die Beleuchtungslichtwellenlänge und eine erste Linearpolarisationsrichtung aufweist, auf den Beleuchtungsstrahlengang (15) zur Beleuchtung einer Probe (16) gelenkt wird, und wobei durch Wechselwirkung mit einer im zweiten Kristall (46) vorhandenen zweiten mechanischen Welle, die die Schallfrequenz aufweist, Beleuchtungslicht, das die Beleuchtungslichtwellenlänge und eine zweite, von der ersten Linearpolarisationsrichtung verschiedene Linearpolarisationsrichtung aufweist, auf den Beleuchtungsstrahlengang (15) zur Beleuchtung einer Probe (16) gelenkt wird.

9. Akustooptischer Hauptstrahlteiler (13) nach einem der Ansprüche 1 bis 7, **dadurch gekennzeichnet, dass**
a. der akustooptische Hauptstrahlteiler (13) dazu ausgebildet ist, durch Wechselwirkung mit der in einem Kristall (30) propagierenden mechanischen Welle sowohl aus einem ersten polychromatischen und vorzugsweise kollinearen Primärlichtbündel (34) mit einer ersten Linearpolarisationsrichtung, als auch aus einem zweiten polychromatischen und vorzugsweise kollinearen Primärlichtbündel (35) mit einer zweiten, von der ersten Linearpolarisationsrichtung verschiedenen, insbesondere senkrechte, Linearpolarisationsrichtung jeweils Beleuchtungslicht (14) der der Frequenz der mechanischen Welle zugeordneten Beleuchtungslichtwellenlänge abzuspalten und zur Beleuchtung einer Probe (16) auf einen Beleuchtungsstrahlengang (15) zu lenken, oder dass
b. der akustooptische Hauptstrahlteiler (13) dazu ausgebildet ist, durch Wechselwirkung mit der in einem Kristall (30) propagierenden mechanischen Welle sowohl Beleuchtungslicht, das die Beleuchtungslichtwellenlänge und eine erste Linearpolarisationsrichtung aufweist, als auch Beleuchtungslicht, das die Beleuchtungslichtwellenlänge und eine zweite, andere, insbesondere senkrechte, Linearpolarisationsrichtung aufweist, auf den Beleuchtungsstrahlengang (15) zur Beleuchtung einer Probe (16) zu lenken.

10. Akustooptischer Hauptstrahlteiler (13) nach einem der Ansprüche 1 bis 9, **dadurch gekennzeichnet, dass** der akustooptische Hauptstrahlteiler (13) mit mehreren mechanischen Wellen, die jeweils durch unterschiedliche Schallfrequenzen charakterisiert sind, aus dem Detektionslichtbündel (18) Anteile von an einer Probe (16) gestreutem und/oder reflektiertem Beleuchtungslicht (14) mehrerer, den Schallfrequenzen zugeordneter Beleuchtungslichtwellenlängen entfernt.

11. Akustooptischer Hauptstrahlteiler (13) nach einem der Ansprüche 1 bis 10, **dadurch gekennzeichnet, dass** der akustooptische Hauptstrahlteiler (13) einen ersten Kristall (45) und einen zweiten Kristall (46) aufweist, wobei
a. in dem ersten Kristall (45) simultan mit mehreren mechanischen Wellen, die jeweils durch unterschiedliche, unterschiedlichen Beleuchtungslichtwellenlängen zugeordneten Schallfrequenzen charakterisiert sind, Anteile von an einer Probe (16) gestreutem und/oder reflektiertem Beleuchtungslicht, das eine erste Linearpolarisationsrichtung und die mehreren, den Schallfrequenzen zugeordnete Beleuchtungslichtwellenlängen aufweist, aus dem Detektionslichtbündel (18) heraus gelenkt werden und wobei
b. in dem zweiten Kristall (30) simultan mit mehreren mechanischen Wellen, die dieselben Schallfrequenzen aufweisen, wie die mechanischen Wellen des ersten Kristalls (45), Anteile von an einer Probe (16) gestreutem und/oder reflektiertem Beleuchtungslicht (14) der mehreren, den Schallfrequenzen zugeordneten Beleuchtungslichtwellenlängen und einer zweiten, von der ersten Linearpolarisationsrichtung verschiedenen Linearpolarisationsrichtung aus dem Detektionslichtbündel (18) heraus gelenkt werden.

12. Akustooptischer Hauptstrahlteiler (13) nach einem der Ansprüche 1 bis 11, **dadurch gekennzeichnet, dass** in dem Hauptstrahlteiler (13), insbesondere in einem Kristall (30) des Hauptstrahlteilers (13), simultan mehrere mechanischen Wellen propagieren, die jeweils durch unterschiedliche, unterschiedlichen Beleuchtungslichtwellenlängen zugeordnete Schallfrequenzen charakterisiert sind, wobei jede der mechanischen Wellen jeweils sowohl den die ihrer Frequenz zugeordnete Beleuchtungswellenlänge aufweisenden Anteil mit einer ersten Linearpolarisationsrichtung, also auch den Anteil mit einer zweiten, zur ersten Linearpolarisationsrichtung senkrechten Linearpolarisationsrichtung ablenkt und dadurch aus dem Detektionslichtbündel (18) entfernt.

13. Akustooptischer Hauptstrahlteiler (13) nach einem der Ansprüche 1 bis 12, **dadurch gekennzeichnet, dass** die mechanischen Wellen eines Kristalls (30) des akustooptischen Strahlteilers dieselbe Ausbreitungsrichtung aufweisen und/oder von demselben Schallerzeuger (36) erzeugt sind.

14. Akustooptischer Hauptstrahlteiler (13) nach einem der Ansprüche 1 bis 13, **dadurch gekennzeichnet, dass**
a. der akustooptische Hauptstrahlteiler (13) mit mehreren mechanischen Wellen, die unterschiedliche Schallfrequenzen aufweisen, aus polychromatischem Primärlicht Beleuchtungslicht (14) mehrerer Beleuchtungslichtwellenlängen abspaltet und zur Beleuchtung einer Probe (16) auf einen Beleuchtungsstrahlengang (15) lenkt und/oder dass
b. der akustooptische Hauptstrahlteiler (13) mit mehreren mechanischen Wellen, die unterschiedliche Schallfrequenzen aufweisen, aus einem polychromatischen und kollinearen Primärlichtbündel Beleuchtungslicht (14) mehrerer Beleuchtungslichtwellenlängen abspaltet und zur Beleuchtung einer Probe (16) auf einen Beleuchtungsstrahlengang (15) lenkt und/oder dass
c. der akustooptische Hauptstrahlteiler (13) mit mehreren mechanischen Wellen, die unterschiedliche Schallfrequenzen aufweisen, jeweils sowohl aus einem ersten polychromatischen und vorzugsweise kollinearen Primärlichtbündel wenigstens einer Lichtquelle mit einer ersten Linearpolarisationsrichtung, als auch aus einem zweiten polychromatischen und vorzugsweise kollinearen Primärlichtbündel wenigstens einer Lichtquelle mit einer zweiten, zur ersten Linearpolarisationsrichtung senkrechten Linearpolarisationsrichtung jeweils Beleuchtungslicht (14) mehrerer Wellenlängen abspaltet und zur Beleuchtung einer Probe (16) auf einen Beleuchtungsstrahlengang (15) lenkt, wobei jeweils der Frequenz der jeweiligen mechanischen Welle einer der Beleuchtungslichtwellenlängen zugeordnet ist.

15. Akustooptischer Hauptstrahlteiler (13) nach einem der Ansprüche 1 bis 14, **dadurch gekennzeichnet, dass**
a. der akustooptische Hauptstrahlteiler (13) und/oder ein Kristall (45, 46) des Hauptstrahlteilers (13) einen ersten Eingang (39) für ein erstes Primärlichtbündel (34) einer ersten Linearpolarisationsrichtung, aus dem Beleuchtungslicht (14) der vorgewählten oder vorwählbaren Wellenlänge zur Beleuchtung einer Probe (16) abspaltbar ist, und einen zweiten Eingang (54) für ein zweites Primärlichtbündel (35) einer zweiten, anderen, insbesondere senkrechten, Linearpolarisationsrichtung, aus dem Beleuchtungslicht (14) der vorgewählten oder vorwählbaren Wellenlänge zur Beleuchtung einer Probe (16) abspaltbar ist, aufweist, oder dass
b. der akustooptische Hauptstrahlteiler (13) einen Polarisationsstrahlteiler (33) zum räumlichen Aufspalten eines Primärlichtbündels (2) in einen ersten Anteil mit einer ersten Linearpolarisationsrichtung und in einen zweiten Anteil mit einer zweiten, anderen, insbesondere senkrechten, Linearpolarisationsrichtung, aufweist.

16. Akustooptischer Hauptstrahlteiler (13) nach einem der Ansprüche 1 bis 15, **dadurch gekennzeichnet, dass** das auf den Beleuchtungsstrahlengang (15) gelenkte Beleuchtungslicht (14) den akustooptischen Hauptstrahlteiler (13) und/oder einen Kristall (30) des akustooptischen Hauptstrahlteilers (13) als kollineares Beleuchtungslichtbündel verlässt.

17. Akustooptischer Hauptstrahlteiler (13) nach einem der Ansprüche 1 bis 16, **dadurch gekennzeichnet, dass**
a. ein Kristall (30) des akustooptischen Hauptstrahlteilers (13), durch den die mechanische Welle propagiert, eine Eintrittsfläche (31) für das Detektionslicht (18) aufweist und/oder dass
b. ein Kristall (30) des akustooptischen Hauptstrahlteilers (13), durch den die mechanische Welle propagiert, eine Eintrittsfläche (31) für das Detektionslicht (18) aufweist, durch die das Detektionslicht (18) mit einem Einfallswinkel von Null Grad einfällt und/oder dass
c. ein Kristall (30) des akustooptischen Hauptstrahlteilers (13), durch den die mechanische Welle propagiert, eine Austrittsfläche (32) für das Detektionslicht (18) aufweist und/oder dass
d. ein Kristall (30) des akustooptischen Hauptstrahlteilers (13), durch den die mechanische Welle propagiert, eine Austrittsfläche (32) für das Detektionslicht (18) aufweist, durch die das Detektionslicht (18) den Kristall (30) mit einem Ausfallswinkel von Null Grad verlässt und/oder dass
e. ein Kristall (30) des akustooptischen Hauptstrahlteilers (13), durch den die mechanische Welle propagiert, eine Eintrittsfläche (31) und eine hierzu parallel ausgerichtete Austrittsfläche (32) für das Detektionslicht (18) aufweist.

18. Akustooptischer Hauptstrahlteiler (13) nach einem der Ansprüche 1 bis 17, **dadurch gekennzeichnet, dass** zwei Kristalle (45, 46) derart in Reihe geschaltet sind, dass sie nacheinander von dem von der Probe (16) ausgehenden Detektionslicht (18) durchlaufen werden und dass das Eintrittsfenster (50) des ersten Kristalls parallel zum Austrittsfenster (54) des zweiten Kristalls angeordnet ist und dass zusätzlich das Austrittsfenster (49) des ersten Kristalls parallel zum Eintrittsfenster (52) des zweiten Kristalls angeordnet ist.

19. Akustooptischer Hauptstrahlteiler (13) nach einem der Ansprüche 1 bis 18, **dadurch gekennzeichnet, dass**
a. ein Kristall (30) des akustooptischen Hauptstrahlteilers (13), durch den die mechanische Welle propagiert, wenigstens eine Eintrittsfläche (32) für das Primärlicht wenigstens einer Lichtquelle aufweist und/oder dass
b. ein Kristall (30) des akustooptischen Hauptstrahlteilers (13), durch den die mechanische Welle propagiert, wenigstens eine Eintrittsfläche für das Primärlicht wenigstens einer Lichtquelle aufweist, die gleichzeitig die Austrittsfläche (32) für das Detektionslicht (18) ist.
c. ein Kristall (30) des akustooptischen Hauptstrahlteilers (13), durch den die mechanische Welle propagiert, eine Austrittsfläche (31) für das Beleuchtungslicht (14) aufweist, die gleichzeitig die Eintrittsfläche für das Detektionslicht (18) ist und/oder dass
d. ein Kristall (30) des akustooptischen Hauptstrahlteilers (13), durch den die mechanische Welle propagiert, eine Eintrittsfläche (32) für Primärlicht wenigstens einer Lichtquelle und eine Austrittsfläche (31) für das abgespaltene Beleuchtungslicht (14) aufweist, die derart zueinander ausgerichtet sind, dass das mit der mechanischen Welle abgelenkte Beleuchtungslicht (14) mit einem Einfallswinkel von Null Grad auf die Austrittsfläche trifft und/oder dass
e. ein Kristall (30) des akustooptischen Hauptstrahlteilers (13), durch den die mechanische Welle propagiert, eine Eintrittsfläche (32) für Primärlicht wenigstens einer Lichtquelle und eine Austrittsfläche (31) für das abgespaltene Beleuchtungslicht (14) aufweist, die derart zueinander ausgerichtet sind, dass das Primärlicht als kollineares Primärlichtbündel in den Kristall (30) einkoppelbar ist und das mit der mechanischen Welle abgelenkte Beleuchtungslicht (14) den Kristall (30) als kollineares Beleuchtungslichtbündel verlässt.

20. Mikroskop, insbesondere Scanmikroskop oder konfokales Scanmikroskop, mit einem akustooptischen Hauptstrahlteiler (13) nach einem der Ansprüche 1 bis 19.

## Claims

1. Acousto-optical main beam splitter (13) for a scanning microscope, which acousto-optical main beam splitter is configured and intended to direct illumination light (14) of a preselected or preselectable illumination light wavelength onto an illumination beam path (15) for illuminating a sample (16) and to direct detection light (18) coming from a sample (16) onto a detection beam path, wherein one mechanical wave of a sound frequency assigned to the illumination light wavelength or a plurality of mechanical waves having the same sound frequency assigned to the illumination light wavelength propagates or propagate in a crystal (30) of the acousto-optical main beam splitter (13), **characterized in that** the acousto-optical main beam splitter (13) comprises at least one dispersive optical component (37) which compensates for a spatial colour splitting of a primary light (2) and/or of the illumination light (14), said spatial colour splitting being brought about at least partly by the crystal (30) of the acousto-optical main beam splitter (13) through which the mechanical wave propagates, and has a first entrance surface (38) for light having a first linear polarization direction and a second entrance surface (40) for lighting having a second linear polarization direction, which is perpendicular to the first linear polarization direction, wherein
a. from the detection light beam (18) coming from a sample (16), as a result of interaction with said one mechanical wave or as a result of interaction with the mechanical waves, both a portion of the detection light beam (18) that has the illumination light wavelength and a first linear polarization direction and a portion of the detection light that has the illumination light wavelength and a second linear polarization direction perpendicular to the first linear polarization direction are deflected and thereby removed from the detection light beam (18), and/or **in that**
b. the acousto-optical main beam splitter (13) is configured, as a result of interaction with said one mechanical wave or as a result of interaction with the mechanical waves, to direct both the portion of illumination light that has the preselected illumination light wavelength and a first linear polarization direction and the portion of illumination light that has the preselected illumination light wavelength and a second linear polarization direction, which is different from, in particular perpendicular to, the first linear polarization direction, onto an illumination beam path (15) for illuminating a sample (16).

2. Acousto-optical main beam splitter (13) according to Claim 1, **characterized in that** the acousto-optical main beam splitter (13) comprises a first crystal (45) and a second crystal (46), which are arranged in such a way that the detection light beam (18) passes through them successively, wherein, as a result of interaction with a first mechanical wave present in the first crystal (45) and having the sound frequency, the portion having the illumination light wavelength and the first linear polarization direction is deflected and thereby removed from the detection light beam (18), and wherein, as a result of interaction with a second mechanical wave present in the second crystal (46) and likewise having the sound frequency, the portion having the illumination light wavelength and the second linear polarization direction is deflected and thereby removed from the detection light beam (18).

3. Acousto-optical main beam splitter (13) according to Claim 2, **characterized in that**
a. the first crystal (45) differs from the second crystal (46) in terms of shape and/or size and/or crystal cut, and/or **in that**
b. the orientation of the direction of propagation of the detection light beam (18) relative to the lattice structure of the first crystal (45) is different from the orientation of the direction of propagation of the detection light beam (18) relative to the lattice structure of the second crystal (46), and/or **in that**
c. the orientation of the direction of propagation of the first mechanical wave relative to the lattice structure of the first crystal (45) is different from the orientation of the direction of propagation of the second mechanical wave relative to the lattice structure of the second crystal (46).

4. Acousto-optical main beam splitter (13) according to Claim 2 or 3, **characterized in that**
a. the detection light beam (18) passes first through the first crystal (45) and then through the second crystal (46), and **in that**, as a result of interaction with the mechanical wave of the first crystal (45), illumination light (14) of the illumination light wavelength is directed onto an illumination beam path (15), and/or **in that**
b. the detection light beam (18) passes first through the first crystal (45) and then through the second crystal (46) and **in that**, as a result of interaction with the mechanical wave of the second crystal (46), illumination light (14) of the illumination light wavelength is directed onto an illumination beam path (15).

5. Acousto-optical main beam splitter (13) according to any of Claims 1 to 4, **characterized in that** the acousto-optical main beam splitter (13) comprises a crystal (30) in which the mechanical wave propagates, wherein the crystal (30), on the one hand, and the direction of propagation of the mechanical wave, on the other hand, are oriented relative to one another and in each case relative to the detection light beam (18) incident in the crystal (30) in such a way that the acousto-optical main beam splitter (13) with the mechanical wave deflects both the portion of the detection light beam that has the illumination wavelength and a first linear polarization direction and the portion of the detection light beam (18) that has the illumination wavelength and a second linear polarization direction, which is perpendicular to the first linear polarization direction, and thereby removes them from the detection light beam (18).

6. Acousto-optical main beam splitter (13) according to any of Claims 1 to 5, **characterized in that**
a. the first linear polarization direction is the linear polarization direction of the ordinary light relative to a birefringence property of the crystal (30), and/or **in that**
b. the second linear polarization direction is the linear polarization direction of the extraordinary light relative to a birefringence property of the crystal (30), and/or **in that**
c. the first or the second linear polarization direction is arranged in the plane spanned by the direction of propagation of the mechanical wave and the direction of propagation of the detection light beam (18).

7. Acousto-optical main beam splitter (13) according to any of Claims 1 to 6, **characterized in that** the beam-guiding components of the main beam splitter (13) are arranged and configured in such a way that the residual part of the detection light beam (18) leaves the acousto-optical main beam splitter (13) collinearly, and/or **in that** the illumination light beams (14) of the desired wavelength, independently of their polarization direction, are combined collinearly on the illumination beam path onto which they were directed.

8. Acousto-optical main beam splitter (13) according to any of Claims 1 to 7, **characterized in that** the acousto-optical main beam splitter (13) comprises a first crystal (45) and a second crystal (46), which are arranged in particular in such a way that the detection light beam (18) passes through them successively wherein, as a result of interaction with a first mechanical wave present in the first crystal (45) and having the sound frequency, illumination light having the illumination light wavelength and a first linear polarization direction is directed onto the illumination beam path (15) for illuminating a sample (16), and wherein, as a result of interaction with a second mechanical wave present in the second crystal (46) and having the sound frequency, illumination light having the illumination light wavelength and a second linear polarization direction, which is different from the first linear polarization direction, is directed onto the illumination beam path (15) for illuminating a sample (16).

9. Acousto-optical main beam splitter (13) according to any of Claims 1 to 7, **characterized in that**
a. the acousto-optical main beam splitter (13) is configured, as a result of interaction of the mechanical wave propagating in a crystal (30), to split both from a first polychromatic and preferably collinear primary light beam (34) having a first linear polarization direction, and from a second polychromatic and preferably collinear primary light beam (35) having a second linear polarization direction, which is different from, in particular perpendicular to, the first linear polarization direction, in each case illumination light (14) of the illumination light wavelength assigned to the frequency of the mechanical wave and to direct said illumination light onto an illumination beam path (15) for illuminating a sample (16), or **in that**
b. the acousto-optical main beam splitter (13) is configured, as a result of interaction with the mechanical wave propagating in a crystal (30), to direct both illumination light having the illumination light wavelength and a first linear polarization direction, and illumination light having the illumination light wavelength and a second, different, in particular perpendicular, linear polarization direction onto the illumination beam path (15) for illuminating a sample (16).

10. Acousto-optical main beam splitter (13) according to any of Claims 1 to 9, **characterized in that** the acousto-optical main beam splitter (13) with a plurality of mechanical waves, which are each **characterized by** different sound frequencies, removes from the detection light beam (18) portions of illumination light (14) of a plurality of illumination light wavelengths assigned to the sound frequencies, said illumination light having been scattered and/or reflected at a sample (16).

11. Acousto-optical main beam splitter (13) according to any of Claims 1 to 10, **characterized in that** the acousto-optical main beam splitter (13) comprises a first crystal (45) and a second crystal (46), wherein
a. in the first crystal (45) simultaneously with a plurality of mechanical waves, which are each **characterized by** different sound frequencies assigned to different illumination light wavelengths, portions of illumination light having a first linear polarization direction and the plurality of illumination light wavelengths assigned to the sound frequencies, said illumination light having been scattered and/or reflected at a sample (16), are directed out of the detection light beam (18), and wherein
b. in the second crystal (30) simultaneously with a plurality of mechanical waves having the same sound frequencies as the mechanical waves of the first crystal (45), portions of illumination light (14) of the plurality of illumination light wavelengths assigned to the sound frequencies and having a second linear polarization direction, which is different from the first linear polarization direction, said illumination light having been scattered and/or reflected at a sample (16), are directed out of the detection light beam (18).

12. Acousto-optical main beam splitter (13) according to any of Claims 1 to 11, **characterized in that** a plurality of mechanical waves, which are each **characterized by** different sound frequencies assigned to different illumination light wavelengths, propagate simultaneously in the main beam splitter (13), in particular in a crystal (30) of the main beam splitter (13), wherein each of the mechanical waves in each case deflects both the portion having the illumination wavelength assigned to its frequency and having a first linear polarization direction and the portion having a second linear polarization direction perpendicular to the first linear polarization direction and thereby removes them from the detection light beam (18).

13. Acousto-optical main beam splitter (13) according to any of Claims 1 to 12, **characterized in that** the mechanical waves of a crystal (30) of the acousto-optical beam splitter have the same direction of propagation and/or are generated by the same sound generator (36).

14. Acousto-optical main beam splitter (13) according to any of Claims 1 to 13, **characterized in that**
a. the acousto-optical main beam splitter (13) with a plurality of mechanical waves having different sound frequencies splits illumination light (14) of a plurality of illumination light wavelengths from polychromatic primary light and directs it onto an illumination beam path (15) for illuminating a sample (16), and/or **in that**
b. the acousto-optical main beam splitter (13) with a plurality of mechanical waves having different sound frequencies splits illumination light (14) of a plurality of illumination light wavelengths from a polychromatic and collinear primary light beam and directs it onto an illumination beam path (15) for illuminating a sample (16), and/or **in that**
c. the acousto-optical main beam splitter (13) with a plurality of mechanical waves having different sound frequencies splits in each case both from a first polychromatic and preferably collinear primary light beam of at least one light source having a first linear polarization direction, and from a second polychromatic and preferably collinear primary light beam of at least one light source having a second linear polarization direction, which is perpendicular to the first linear polarization direction, in each case illumination light (14) of a plurality of wavelengths and directs them onto an illumination beam path (15) for illuminating a sample (16), wherein one of the illumination light wavelengths is assigned in each case to the frequency of the respective mechanical wave.

15. Acousto-optical main beam splitter (13) according to any of Claims 1 to 14, **characterized in that**
a. the acousto-optical main beam splitter (13) and/or a crystal (45, 46) of the main beam splitter (13) comprise(s) a first input (39) for a first primary light beam (34) of a first linear polarization direction, from which illumination light (14) of the preselected or preselectable wavelength is splittable for illuminating a sample (16), and a second input (54) for a second primary light beam (35) of a second, different, in particular perpendicular, linear polarization direction, from which illumination light (14) of the preselected or preselectable wavelength is splittable for illuminating a sample (16), or **in that**
b. the acousto-optical main beam splitter (13) comprises a polarization beam splitter (33) for spatially splitting a primary light beam (2) into a first portion having a first linear polarization direction and into a second portion having a second, different, in particular perpendicular, linear polarization direction.

16. Acousto-optical main beam splitter (13) according to any of Claims 1 to 15, **characterized in that** the illumination light (14) directed onto the illumination beam path (15) leaves the acousto-optical main beam splitter (13) and/or a crystal (30) of the acousto-optical main beam splitter (13) as a collinear illumination light beam.

17. Acousto-optical main beam splitter (13) according to any of Claims 1 to 16, **characterized in that**
a. a crystal (30) of the acousto-optical main beam splitter (13) through which the mechanical wave propagates has an entrance surface (31) for the detection light (18), and/or **in that**
b. a crystal (30) of the acousto-optical main beam splitter (13) through which the mechanical wave propagates has an entrance surface (31) for the detection light (18), through which entrance surface the detection light (18) is incident with an angle of incidence of zero degrees, and/or **in that**
c. a crystal (30) of the acousto-optical main beam splitter (13) through which the mechanical wave propagates has an exit surface (32) for the detection light (18), and/or **in that**
d. a crystal (30) of the acousto-optical main beam splitter (13) through which the mechanical wave propagates has an exit surface (32) for the detection light (18), through which exit surface the detection light (18) leaves the crystal (30) with an angle of emergence of zero degrees, and/or **in that**
e. a crystal (30) of the acousto-optical main beam splitter (13) through which the mechanical wave propagates has an entrance surface (31) and an exit surface (32) oriented parallel thereto for the detection light (18).

18. Acousto-optical main beam splitter (13) according to any of Claims 1 to 17, **characterized in that** two crystals (45, 46) are disposed in series in such a way that the detection light (18) emanating from the sample (16) passes through them successively, and that the entrance window (50) of the first crystal is arranged parallel to the exit window (54) of the second crystal, and that in addition the exit window (49) of the first crystal is arranged parallel to the entrance window (52) of the second crystal.

19. Acousto-optical main beam splitter (13) according to any of Claims 1 to 18, **characterized in that**
a. a crystal (30) of the acousto-optical main beam splitter (13) through which the mechanical wave propagates has at least one entrance surface (32) for the primary light of at least one light source, and/or **in that**
b. a crystal (30) of the acousto-optical main beam splitter (13) through which the mechanical wave propagates has at least one entrance surface for the primary light of at least one light source, which entrance surface is simultaneously the exit surface (32) for the detection light (18),
c. a crystal (30) of the acousto-optical main beam splitter (13) through which the mechanical wave propagates has an exit surface (31) for the illumination light (14), which is simultaneously the entrance surface for the detection light (18) and/or **in that**
d. a crystal (30) of the acousto-optical main beam splitter (13) through which the mechanical wave propagates has an entrance surface (32) for primary light of at least one light source and an exit surface (31) for the illumination light (14) split off, which are oriented with respect to one another in such a way that the illumination light (14) deflected by the mechanical wave impinges on the exit surface with an angle of incidence of zero degrees, and/or **in that**
e. a crystal (30) of the acousto-optical main beam splitter (13) through which the mechanical wave propagates has an entrance surface (32) for primary light of at least one light source and an exit surface (31) for the illumination light (14) split off, which are oriented with respect to one another in such a way that the primary light is able to be coupled into the crystal (30) as a collinear primary light beam and the illumination light (14) deflected by the mechanical wave leaves the crystal (30) as a collinear illumination light beam.

20. Microscope, in particular scanning microscope or confocal scanning microscope, comprising an acousto-optical main beam splitter (13) according to any of Claims 1 to 19.

## Revendications

1. Séparateur de faisceau principal acousto-optique (13) pour un microscope à balayage, lequel est configuré et conçu pour dévier la lumière d'éclairage (14) d'une longueur d'onde de lumière d'éclairage présélectionnée ou pouvant être présélectionnée sur un trajet de faisceau d'éclairage (15) en vue d'éclairer un échantillon (16) et dévier la lumière de détection (18) en provenance d'un échantillon (16) sur un trajet de faisceau de détection, une onde mécanique ayant une fréquence acoustique associée à la longueur d'onde de lumière d'éclairage se propageant ou plusieurs ondes mécaniques qui possèdent la même fréquence acoustique associée à la longueur d'onde de lumière d'éclairage se propageant dans un cristal (30) du séparateur de faisceau principal acousto-optique (13), **caractérisé en ce que** le séparateur de faisceau principal acousto-optique (13) possède au moins un composant optique (37) dispersif qui compense une dissociation des couleurs dans l'espace d'une lumière primaire (2) et/ou de la lumière d'éclairage (14), provoquée au moins partiellement par le cristal (30) du séparateur de faisceau principal acousto-optique (13) à travers lequel se propage l'onde mécanique, et qui possède une première surface d'entrée (38) pour la lumière ayant un premier sens de polarisation linéaire et une deuxième surface d'entrée (40) pour la lumière ayant un deuxième sens de polarisation linéaire perpendiculaire au premier sens de polarisation linéaire,
a. une part du faisceau lumineux de détection (18), laquelle possède la longueur d'onde de lumière d'éclairage et un premier sens de polarisation linéaire, ainsi qu'une part de la lumière de détection, laquelle possède la longueur d'onde de lumière d'éclairage et un deuxième sens de polarisation linéaire perpendiculaire au premier sens de polarisation linéaire, étant déviées du faisceau lumineux de détection (18) en provenance d'un échantillon (16) - et ainsi supprimées du faisceau lumineux de détection (18) - par interaction avec ladite onde mécanique ou par interaction avec les ondes mécaniques, et/ou **en ce que**
b. le séparateur de faisceau principal acousto-optique (13) est configuré pour dévier à la fois la part de la lumière d'éclairage qui possède la longueur d'onde de lumière d'éclairage présélectionnée et un premier sens de polarisation linéaire et la part de la lumière d'éclairage qui possède la longueur d'onde de lumière d'éclairage présélectionnée et un deuxième sens de polarisation linéaire différent du premier sens de polarisation linéaire, notamment perpendiculaire à celui-ci, sur un trajet de faisceau d'éclairage (15) par interaction avec ladite onde mécanique ou par interaction avec les ondes mécaniques en vue d'éclairer un échantillon (16).

2. Séparateur de faisceau principal acousto-optique (13) selon la revendication 1, **caractérisé en ce que** le séparateur de faisceau principal acousto-optique (13) possède un premier cristal (45) et un deuxième cristal (46) qui sont disposés de telle sorte qu'ils sont traversés l'un après l'autre par le faisceau lumineux de détection (18), la part qui possède la longueur d'onde de lumière d'éclairage et le premier sens de polarisation linéaire étant déviée - et ainsi supprimée du faisceau lumineux de détection (18) - par interaction avec une première onde mécanique présente dans le premier cristal (45), laquelle possède la fréquence acoustique, et la part qui possède la longueur d'onde de lumière d'éclairage et le deuxième sens de polarisation linéaire étant déviée - et ainsi supprimée du faisceau lumineux de détection (18) - par interaction avec une deuxième onde mécanique présente dans le deuxième cristal (46), laquelle possède également la fréquence acoustique.

3. Séparateur de faisceau principal acousto-optique (13) selon la revendication 2, **caractérisé en ce que**
a. le premier cristal (45) se différencie du deuxième cristal (46) par sa forme et/ou sa dimension et/ou sa taille de cristal et/ou **en ce que**
b. l'orientation du sens de diffusion du faisceau lumineux de détection (18) par rapport à la structure en réseau du premier cristal (45) est différente de l'orientation du sens de diffusion du faisceau lumineux de détection (18) par rapport à la structure en réseau du deuxième cristal (46) et/ou **en ce que**
c. l'orientation du sens de diffusion de la première onde mécanique par rapport à la structure en réseau du premier cristal (45) est différente de l'orientation du sens de diffusion de la deuxième onde mécanique par rapport à la structure en réseau du deuxième cristal (46) .

4. Séparateur de faisceau principal acousto-optique (13) selon la revendication 2 ou 3, **caractérisé en ce que**
a. le faisceau lumineux de détection (18) traverse tout d'abord le premier cristal (45) et ensuite le deuxième cristal (46) et **en ce que** la lumière d'éclairage (14) ayant la longueur d'onde de lumière d'éclairage est déviée sur un trajet de faisceau d'éclairage (15) par interaction avec l'onde mécanique du premier cristal (45) et/ou **en ce que**
b. le faisceau lumineux de détection (18) traverse tout d'abord le premier cristal (45) et ensuite le deuxième cristal (46) et **en ce que** la lumière d'éclairage (14) ayant la longueur d'onde de lumière d'éclairage est déviée sur un trajet de faisceau d'éclairage (15) par interaction avec l'onde mécanique du deuxième cristal (46) .

5. Séparateur de faisceau principal acousto-optique (13) selon l'une des revendications 1 à 4, **caractérisé en ce que** le séparateur de faisceau principal acousto-optique (13) possède un cristal (30) dans lequel se propage l'onde mécanique, le cristal (30) d'une part et le sens de diffusion de l'onde mécanique d'autre part étant orientés l'un par rapport à l'autre et respectivement par rapport au faisceau lumineux de détection (18) incident dans le cristal (30) de telle sorte que le séparateur de faisceau principal acousto-optique (13), avec l'onde mécanique, dévie à la fois la part du faisceau lumineux de détection qui possède la longueur d'onde de lumière d'éclairage et un premier sens de polarisation linéaire et la part du faisceau lumineux de détection (18) qui possède la longueur d'onde de lumière d'éclairage et un deuxième sens de polarisation linéaire perpendiculaire au premier sens de polarisation linéaire, et les supprime ainsi du faisceau lumineux de détection (18).

6. Séparateur de faisceau principal acousto-optique (13) selon l'une des revendications 1 à 5, **caractérisé en ce que**
a. le premier sens de polarisation linéaire est le sens de polarisation linéaire de la lumière ordinaire en rapport à une propriété de biréfringence du cristal (30) et/ou **en ce que**
b. le deuxième sens de polarisation linéaire est le sens de polarisation linéaire de la lumière extraordinaire en rapport à une propriété de biréfringence du cristal (30) et/ou **en ce que**
c. le premier ou le deuxième sens de polarisation linéaire est disposé dans le plan qui est formé par le sens de diffusion de l'onde mécanique et le sens de diffusion du faisceau lumineux de détection (18).

7. Séparateur de faisceau principal acousto-optique (13) selon l'une des revendications 1 à 6, **caractérisé en ce que** les composants de guidage du faisceau du séparateur de faisceau principal (13) sont disposés et configurés de telle sorte que la partie restante du faisceau lumineux de détection (18) quitte le séparateur de faisceau principal acousto-optique (13) de manière colinéaire et/ou **en ce que** les faisceaux lumineux d'éclairage (14) ayant la longueur d'onde souhaitée sont réunis indépendamment de leur sens de polarisation sur le trajet de faisceau de lumière d'éclairage sur lequel ils ont été déviés.

8. Séparateur de faisceau principal acousto-optique (13) selon l'une des revendications 1 à 7, **caractérisé en ce que** le séparateur de faisceau principal acousto-optique (13) possède un premier cristal (45) et un deuxième cristal (46) qui sont notamment disposés de telle sorte qu'ils sont traversés l'un après l'autre par le faisceau lumineux de détection (18), la lumière d'éclairage qui possède la longueur d'onde de lumière d'éclairage et un premier sens de polarisation linéaire étant déviée sur le trajet de faisceau d'éclairage (15) en vue de l'éclairage d'un échantillon (16) par interaction avec une première onde mécanique présente dans le premier cristal (45), laquelle possède la fréquence acoustique, et la lumière d'éclairage qui possède la longueur d'onde de lumière d'éclairage et un deuxième sens de polarisation linéaire différent du premier sens de polarisation linéaire étant déviée sur le trajet de faisceau d'éclairage (15) en vue de l'éclairage d'un échantillon (16) par interaction avec une deuxième onde mécanique présente dans le deuxième cristal (46), laquelle possède la fréquence acoustique.

9. Séparateur de faisceau principal acousto-optique (13) selon l'une des revendications 1 à 7, **caractérisé en ce que**
a. le séparateur de faisceau principal acousto-optique (13) est configuré pour, par interaction avec l'onde mécanique qui se propage dans un cristal (30), dissocier respectivement la lumière d'éclairage (14) ayant la longueur d'onde de lumière d'éclairage associée à la fréquence de l'onde mécanique à la fois d'un premier faisceau lumineux primaire (34) polychromatique et de préférence colinéaire, ayant un premier sens de polarisation linéaire, et d'un deuxième faisceau lumineux primaire (35) polychromatique et de préférence colinéaire, ayant un deuxième sens de polarisation linéaire différent du premier sens de polarisation linéaire, de préférence perpendiculaire à celui-ci, puis la dévier sur un trajet de faisceau d'éclairage (15) en vue de l'éclairage d'un échantillon (16), ou **en ce que**
b. le séparateur de faisceau principal acousto-optique (13) est configuré pour, par interaction avec l'onde mécanique qui se propage dans un cristal (30), dévier à la fois la lumière d'éclairage qui possède la longueur d'onde de lumière d'éclairage et un premier sens de polarisation linéaire et la lumière d'éclairage qui possède la longueur d'onde de lumière d'éclairage et un deuxième sens de polarisation linéaire différent, notamment perpendiculaire, sur le trajet de faisceau d'éclairage (15) en vue de l'éclairage d'un échantillon (16) .

10. Séparateur de faisceau principal acousto-optique (13) selon l'une des revendications 1 à 9, **caractérisé en ce que** le séparateur de faisceau principal acousto-optique (13), avec plusieurs ondes mécaniques qui sont respectivement **caractérisées par** des fréquences acoustiques différentes, élimine du faisceau lumineux de détection (18) des parts de la lumière d'éclairage (14) dispersée et/ou réfléchie au niveau d'un échantillon (16) ayant plusieurs longueurs d'onde de lumière d'éclairage associées aux fréquences acoustiques.

11. Séparateur de faisceau principal acousto-optique (13) selon l'une des revendications 1 à 10, **caractérisé en ce que** le séparateur de faisceau principal acousto-optique (13) possède un premier cristal (45) et un deuxième cristal (46),
a. des parts de la lumière d'éclairage dispersée et/ou réfléchie au niveau d'un échantillon (16), laquelle possède un premier sens de polarisation linéaire et lesdites plusieurs longueurs d'onde de lumière d'éclairage associées aux fréquences acoustiques, étant déviées simultanément hors du faisceau lumineux de détection (18) dans le premier cristal (45) avec plusieurs ondes mécaniques qui sont respectivement **caractérisées par** des fréquences acoustiques différentes associées à des longueurs d'onde de lumière d'éclairage différentes et
b. des parts de la lumière d'éclairage (14) dispersée et/ou réfléchie au niveau d'un échantillon (16) ayant les plusieurs longueurs d'onde de lumière d'éclairage associées aux fréquences acoustiques et un deuxième sens de polarisation linéaire différent du premier sens de polarisation linéaire étant déviées simultanément hors du faisceau lumineux de détection (18) dans le deuxième cristal (30) avec plusieurs ondes mécaniques qui possèdent les mêmes fréquences acoustiques que les ondes mécaniques du premier cristal (45).

12. Séparateur de faisceau principal acousto-optique hors du faisceau lumineux de détection (18) (13) selon l'une des revendications 1 à 11, **caractérisé en ce que** plusieurs ondes mécaniques se propagent simultanément dans le séparateur de faisceau principal (13), notamment dans un cristal (30) du séparateur de faisceau principal (13), lesquelles sont respectivement **caractérisées par** des fréquences acoustiques différentes associées à des longueurs d'onde de lumière d'éclairage différentes, chacune des ondes mécaniques déviant respectivement à la fois la part ayant un premier sens de polarisation linéaire qui possède la longueur d'onde de lumière d'éclairage associée à sa fréquence et aussi la part ayant un deuxième sens de polarisation linéaire perpendiculaire au premier sens de polarisation linéaire et les supprimant ainsi du faisceau lumineux de détection (18) .

13. Séparateur de faisceau principal acousto-optique (13) selon l'une des revendications 1 à 12, **caractérisé en ce que** les ondes mécaniques d'un cristal (30) du séparateur de faisceau acousto-optique possèdent le même sens de diffusion et/ou sont générées par le même générateur acoustique (36).

14. Séparateur de faisceau principal acousto-optique (13) selon l'une des revendications 1 à 13, **caractérisé en ce que**
a. le séparateur de faisceau principal acousto-optique (13) dissocie une lumière d'éclairage (14) ayant plusieurs longueurs d'onde de lumière d'éclairage à partir de lumière primaire polychromatique avec plusieurs ondes mécaniques qui possèdent des fréquences acoustiques différentes et la dévie sur un trajet de faisceau d'éclairage (15) en vue de l'éclairage d'un échantillon (16) et/ou **en ce que**
b. le séparateur de faisceau principal acousto-optique (13) dissocie une lumière d'éclairage (14) ayant plusieurs longueurs d'onde de lumière d'éclairage à partir d'un faisceau lumineux primaire polychromatique et colinéaire avec plusieurs ondes mécaniques qui possèdent des fréquences acoustiques différentes et la dévie sur un trajet de faisceau d'éclairage (15) en vue de l'éclairage d'un échantillon (16) et/ou **en ce que**
c. le séparateur de faisceau principal acousto-optique (13) dissocie respectivement une lumière d'éclairage (14) ayant plusieurs longueurs d'onde respectivement à la fois à partir d'un premier faisceau lumineux primaire polychromatique et de préférence colinéaire d'au moins une source de lumière ayant un premier sens de polarisation linéaire, et à partir d'un deuxième faisceau lumineux primaire polychromatique et de préférence colinéaire d'au moins une source de lumière ayant un deuxième sens de polarisation linéaire perpendiculaire au premier sens de polarisation linéaire avec plusieurs ondes mécaniques qui possèdent des fréquences acoustiques différentes et la dévie sur un trajet de faisceau d'éclairage (15) en vue de l'éclairage d'un échantillon (16), la fréquence de l'onde mécanique étant respectivement associée à l'une des longueurs d'onde de lumière d'éclairage.

15. Séparateur de faisceau principal acousto-optique (13) selon l'une des revendications 1 à 14, **caractérisé en ce que**
a. le séparateur de faisceau principal acousto-optique (13) et/ou un cristal (45 ,46) du séparateur de faisceau principal (13) possède une première entrée (39) pour un premier faisceau lumineux primaire (34) ayant un premier sens de polarisation, à partir duquel peut être dissociée la lumière d'éclairage (14) de la longueur d'onde présélectionnée ou pouvant être présélectionnée en vue de l'éclairage d'un échantillon (16), et une deuxième entrée (54) pour un deuxième faisceau lumineux primaire (35) ayant un deuxième sens de polarisation différent, notamment perpendiculaire, à partir duquel peut être dissociée la lumière d'éclairage (14) de la longueur d'onde présélectionnée ou pouvant être présélectionnée en vue de l'éclairage d'un échantillon (16), ou **en ce que**
b. le séparateur de faisceau principal acousto-optique (13) possède un séparateur de faisceau à polarisation (33) destiné à dissocier dans l'espace un faisceau lumineux primaire (2) en une première part ayant un premier sens de polarisation linéaire et une deuxième part ayant un deuxième sens de polarisation différent, notamment perpendiculaire.

16. Séparateur de faisceau principal acousto-optique (13) selon l'une des revendications 1 à 15, **caractérisé en ce que** la lumière d'éclairage (14) déviée sur le trajet de faisceau d'éclairage (15) quitte le séparateur de faisceau principal acousto-optique (13) et/ou un cristal (30) du séparateur de faisceau principal acousto-optique (13) sous la forme d'un faisceau lumineux d'éclairage colinéaire.

17. Séparateur de faisceau principal acousto-optique (13) selon l'une des revendications 1 à 16, **caractérisé en ce que**
a. un cristal (30) du séparateur de faisceau principal acousto-optique (13) à travers lequel se propage l'onde mécanique possède une surface d'entrée (31) pour la lumière de détection (18) et/ou **en ce que**
b. un cristal (30) du séparateur de faisceau principal acousto-optique (13) à travers lequel se propage l'onde mécanique possède une surface d'entrée (31) pour la lumière de détection (18) à travers laquelle la lumière de détection (18) est incidente avec un angle d'incidence de zéro degré et/ou **en ce que**
c. un cristal (30) du séparateur de faisceau principal acousto-optique (13) à travers lequel se propage l'onde mécanique possède une surface de sortie (32) pour la lumière de détection (18) et/ou **en ce que**
d. un cristal (30) du séparateur de faisceau principal acousto-optique (13) à travers lequel se propage l'onde mécanique possède une surface de sortie (32) pour la lumière de détection (18) à travers laquelle la lumière de détection (18) quitte le cristal (30) avec un angle de réflexion de zéro degré et/ou **en ce que**
e. un cristal (30) du séparateur de faisceau principal acousto-optique (13) à travers lequel se propage l'onde mécanique possède une surface d'entrée (31) et une surface de sortie (32) orientée parallèlement à celle-ci pour la lumière de détection (18).

18. Séparateur de faisceau principal acousto-optique (13) selon l'une des revendications 1 à 17, **caractérisé en ce que** deux cristaux (45, 46) sont montés en série de telle sorte qu'ils sont traversés l'un après l'autre par la lumière de détection (18) émanant de l'échantillon (16) et **en ce que** la fenêtre d'entrée (50) du premier cristal est disposée parallèlement à la fenêtre de sortie (54) du deuxième cristal et **en ce qu'**en plus la fenêtre de sortie (49) du premier cristal est disposée parallèlement à la fenêtre d'entrée (52) du deuxième cristal.

19. Séparateur de faisceau principal acousto-optique (13) selon l'une des revendications 1 à 18, **caractérisé en ce que**
a. un cristal (30) du séparateur de faisceau principal acousto-optique (13) à travers lequel se propage l'onde mécanique possède au moins une surface d'entrée (32) pour la lumière primaire d'au moins une source de lumière et/ou **en ce que**
b. un cristal (30) du séparateur de faisceau principal acousto-optique (13) à travers lequel se propage l'onde mécanique possède au moins une surface d'entrée pour la lumière primaire d'au moins une source de lumière, laquelle surface d'entrée est en même temps la surface de sortie (32) pour la lumière de détection (18),
c. un cristal (30) du séparateur de faisceau principal acousto-optique (13) à travers lequel se propage l'onde mécanique possède une surface de sortie (31) pour la lumière d'éclairage (14) qui est en même temps la surface d'entrée pour la lumière de détection (18) et/ou **en ce que**
d. un cristal (30) du séparateur de faisceau principal acousto-optique (13) à travers lequel se propage l'onde mécanique possède une surface d'entrée (32) pour la lumière primaire d'au moins une source de lumière et une surface de sortie (31) pour la lumière d'éclairage (14) dissociée, lesquelles sont orientées l'une par rapport à l'autre de telle sorte que la lumière d'éclairage (14) déviée avec l'onde mécanique vient frapper la surface de sortie avec un angle d'incidence de zéro degré et/ou **en ce que**
e. un cristal (30) du séparateur de faisceau principal acousto-optique (13) à travers lequel se propage l'onde mécanique possède une surface d'entrée (32) pour la lumière primaire d'au moins une source de lumière et une surface de sortie (31) pour la lumière d'éclairage (14) dissociée, lesquelles sont orientées l'une par rapport à l'autre de telle sorte que la lumière primaire peut être injectée dans le cristal (30) sous la forme d'un faisceau lumineux primaire colinéaire et la lumière d'éclairage (14) déviée avec l'onde mécanique quitte le cristal (30) sous la forme d'un faisceau lumineux d'éclairage colinéaire.

20. Microscope, notamment microscope à balayage ou microscope confocal à balayage, comprenant un séparateur de faisceau principal acousto-optique (13) selon l'une des revendications 1 à 19.
